# EUROPEAN PATENT SPECIFICATION

(11) **EP 4 139 918 B1**
(45) Date of publication and mention of the grant of the patent: **05.02.2025**
(21) Application number: 21847810.5
(22) Date of filing: 14.12.2021
(51) Int. Cl.: G10L 15/32, G10L 15/30, G10L 15/26

(54) **DEVICE ARBITRATION FOR LOCAL EXECUTION OF AUTOMATIC SPEECH RECOGNITION**
ARBITRIERUNG EINES GERÄTES ZUR LOKALEN AUSFÜHRUNG VON AUTOMATISCHER SPRACHERKENNUNG
ARBITRAGE DE DISPOSITIFS POUR EXÉCUTION LOCALE DE RECONNAISSANCE AUTOMATIQUE DE LA PAROLE

(30) Priority: 11.03.2021 US 202117198679
(43) Date of publication of application: 01.03.2023
(60) Divisional application: 24214048.1
(73) Proprietor: Google LLC, Mountain View, CA 94043 (US)
(72) Inventor: SHARIFI, Matthew, Mountain View, California 94043 (US); CARBUNE, Victor, Mountain View, California 94043 (US)
(74) Representative: Derry, Paul Stefan
(86) International application number: PCT/US2021/063370
(87) International publication number: WO 2022/191892

(56) References cited:
- EP-A1- 3 474 273
- EP-A1- 3 716 266
- CN-A- 109 523 991
- US-A1- 2012 215 539
- US-A1- 2016 210 965
- US-A1- 2018 182 397
- US-A1- 2019 318 742
- US-A1- 2020 066 279
- US-A1- 2020 243 094

## Description

### Background

Automatic speech recognition (ASR) techniques convert spoken natural language input into text. For example, audio data captured using a microphone can be converted into text. ASR systems can include an ASR model for use in generating a set of candidate recognitions. The ASR system can select generated text from the set of candidate recognitions.

Humans can engage in human-to-computer dialog with interactive software applications referred to herein as "automated assistants" (also referred to as "digital agents", "chatbots", "interactive personal assistants", "intelligent personal assistants", "assistant applications", "conversational agents", etc.). For example, humans (which when they interact with automated assistants may be referred to as "users") can provide commands and/or requests to an automated assistant using spoken natural language input (i.e., utterances), which can in some cases be converted into text (e.g., converted into text using ASR techniques) and then processed.

US 2019/318742 A1 describes a method which receives a plurality of portions of recognized speech from a plurality of devices. Each portion includes an associated confidence score and time stamp. For one or more time stamps associated with the plurality of portions, the method identifies two or more confidence scores for two or more of the plurality of portions of recognized speech. For the one or more time stamps, one of the two or more of the plurality of portions of recognized speech is selected based on the two or more confidence scores for the two or more of the plurality of portions. The method generates a transcript using the one of the two or more of the plurality of portions of recognized speech selected for the respective one or more time stamps.

EP 3 474 273 A1 describes selectively performing voice recognition using one device among multiple devices that recognize and execute the voice recognition based on at least one of apparatus information of the multiple devices and a function parsed from a result of the voice recognition. Thereby, only a single preferable device in an environment in which multiple devices exist, which can service the user input via voice recognition, actually responds to the voice input and services the voice input of the user. This includes a method for voice recognition in an electronic apparatus, the method comprising: performing a voice recognition corresponding to a voice input; identifying a target apparatus based on at least one from among apparatus information and function information included in a result of the performed voice recognition; and transmitting a control command corresponding to the voice recognition result to the target apparatus.

US 2018/182397 A1 describes methods, systems, and apparatus, including computer programs encoded on a computer storage medium, for collaboration between multiple voice controlled devices are disclosed. In one aspect, a method includes the actions of identifying, by a first computing device, a second computing device that is configured to respond to a particular, predefined hotword; receiving audio data that corresponds to an utterance; receiving a transcription of additional audio data outputted by the second computing device in response to the utterance; based on the transcription of the additional audio data and based on the utterance, generating a transcription that corresponds to a response to the additional audio data; and providing, for output, the transcription that corresponds to the response.

### Summary

The invention provides a method according to claim 1, a system according to claim 12 and a computer program according to claim 15. Preferable aspects are defined by the dependent claims.

Implementations described herein are directed to generating a text representation, of a spoken utterance, based on a candidate text representation, of the spoken utterance, that is generated at a given client device and/or based on one or more additional candidate text representations of the spoken utterance. Each of the additional candidate text representation(s) of the spoken utterance are generated locally at a corresponding one of one or more additional client devices that are in a local environment with the given client device and that communicate with the given client device utilizing one or more local network(s), that are in the same room with the given client device, that are within a defined range of the given client device, that correspond to the same user account, that are in an environment with the given client device in additional or alternative ways, and/or combinations thereof. The candidate text representation of the spoken utterance can be generated by processing audio data that captures the spoken utterance and that is captured at the given client device. The candidate text representation is generated using an automatic speech recognition (ASR) model stored locally at the given client device. An additional candidate text representation can be generated by an additional client device by processing, at the additional client device and using an ASR model stored locally at the additional client device, audio data. The audio data processed at the additional client device can be the audio data captured at the given client device (e.g., it can be transmitted to the additional client device from the given client device) or it can be additional audio data that is captured via microphone(s) of the additional client device.

As one example, audio data capturing the spoken utterance of "set the thermostat to 70 degrees" can be captured at a mobile phone of a user, and a candidate text representation of the spoken utterance can be generated by processing the audio data using an ASR model stored locally at the mobile phone of the user. In some implementations, the audio data capturing the spoken utterance can also be transmitted to additional client device(s) that are in an environment with the mobile phone, such as laptop(s), automated assistant smart speaker(s), and/or automated assistant smart display(s). In those implementations, each of the additional client device(s) can generate a corresponding additional candidate text representation by processing the audio data using a corresponding locally stored additional ASR model. The additional candidate text representation(s) can then be transmitted to the mobile phone of the user, and the mobile phone can generate a text representation based on the candidate text representation (generated at the mobile phone) and the received additional candidate text representation(s) (each generated at a corresponding one of the additional client device(s)). For example, two additional candidate text representations can be received at the mobile phone, each being generated by a corresponding additional client device.

The mobile phone can then determine a final text representation based on the two additional candidate text representations and the candidate text representation. Various techniques can be utilized in determining the final text representation. For example, the candidate text representation can be generated with confidence measure(s) (e.g., a corresponding measure for each word or other fragment) and the additional candidate representations can each be received with corresponding confidence measure(s), and the mobile phone can use the confidence measure(s) in determining the final text representation. For instance, a given additional candidate representation can be used as the final text representation based on it having confidence measure(s) most indicative of high confidence. As another example, the final text representation can be generated to include the word piece(s) that are most common amongst the candidate text representation and the additional candidate text representations. For instance, assume the candidate text representation is "get the thermostat to 70 degrees", a first additional candidate text representation is "set the thermostat to 7 degrees", and a second additional candidate text representation is "set the thermometer to 70 degrees". In such an instance, "set the thermostat to 70 degrees" can be generated as the final text representation, where the twice occurring "set" is selected over the once occurring "get", the twice occurring "thermostat" is selected over the once occurring "thermometer", and the twice occurring "70" is selected over the once occurring "7".

The preceding example describes the mobile phone transmitting locally captured audio data to the additional client device(s) for use by the additional client device(s) in performing local ASR. However, as mentioned above, in some implementations one or more of the additional client device(s) can additionally or alternatively, in generating a corresponding candidate text representation, utilize audio data that is captured locally via microphones of the additional client device. In some of those implementations, the given client device can optionally not transmit the audio data, captured at the given client device, to any of the additional client device(s). As an example, and continuing with the prior example, an additional candidate text representation of the spoken utterance of "Hey Assistant, set the thermostat to 70 degrees" can be generated by an additional client device by processing additional audio data using the ASR model locally stored at the additional client device. The additional audio data can capture the spoken utterance and can be captured via microphone(s) of the additional client device.

In some implementations, and optionally for each of the additional client device(s), a determination is made as to whether to transmit the audio data from the given client device to the additional client device for use, by the additional client device, in performing local ASR. For example, the given client device (or other component(s) of the system) can determine whether to transmit the audio data, captured using the given client device, to an additional client device based on hardware and/or software capabilities of the additional client device. The hardware and/or software capabilities of the additional client device can be ascertained from a home graph or other data stored locally at the given client device and/or based on data transmitted to the given client device by the additional client device. For example, the system can transmit the audio data captured at the given client device to an additional client device when the additional client device is determined to have a low quality microphone. For instance, the system may transmit the audio data, captured at a mobile phone, to a smart watch based on knowledge that the smart watch has a low quality microphone. Additionally or alternatively, the system can determine feature(s) (e.g., a signal to noise ratio) of the audio data captured using the given device, and can determine whether to transmit the audio data to an additional client device based on the feature(s) and, optionally, based on feature(s) (e.g., a signal to noise ratio) of additional audio data captured at the additional client device. For example, the system can determine to not transmit the audio data that is captured at the given client device when the signal to noise ratio indicates the captured audio data is of poor quality. As another example, the system can determine to not transmit the audio data that is captured at the given client device when feature(s) of the additional audio data indicate it is of high quality and/or indicate it is of better quality than the audio data captured at the given client device. Additionally or alternatively, the system can determine to not transmit the audio data based on the communication link (e.g., a wired connection between devices, a wireless connection between devices, etc.) between a given client device and the additional client device(s). For example, the system can determine not to transmit the audio data when there is a low bandwidth connection between the given client device and an additional client device, and/or when there is high latency in the connection between the given client device and an additional client device.

As yet another example, the system can determine whether to transmit the audio data, captured at the given client device, to an additional client device based on historical instances of audio data at the given client device and/or the additional client device. For example, the system can determine to not transmit the audio data when instances of audio data captured at the given client device have historically been of low quality and/or instances of audio data captured at the additional client device have historically been of high quality. Similarly, the system can determine to transmit the audio data when instances of audio data captured at the given client device have historically been of high quality and/or instances of audio data captured at the additional client device have historically been of low quality. As yet a further example, the system can determine whether to transmit the audio data, captured at the given client device, to an additional client device based on whether the additional client device is physically proximate to the given client device (e.g., as determined using a stored home graph and/or active technique(s) to determine current proximity). For instance, the system can determine to transmit the audio data only when the additional client device is not in the same room as the given client device (e.g., as determined based on the home graph) and/or is greater than a threshold distance from the given client device (e.g., as determined based on an active technique to determine distance between the given client device and the additional client device). As yet an additional example, the system can determine whether to transmit the audio data, captured at the given client device, to an additional client device based on whether the additional client device locally detected voice activity (e.g., using a local voice activity detector). For instance, the system can determine to transmit the audio data only when the additional client device does not locally detect voice activity.

In some additional or alternative implementations where the additional client device receives the audio data from the given client device, the additional client device can determine whether, in performing local ASR, to utilize the audio data or to instead utilize locally captured additional audio data. In some of those implementations, the additional client device can, in determining whether to utilize the audio data or the additional audio data, utilize one or more of the consideration(s) described above with respect to determining whether to transmit the audio data. For example, the additional client device can compare the signal to noise ratios of the audio data and the additional audio data, and utilize the one with the higher signal to noise ratio.

As mentioned above, in some implementations the given client device is in an environment with one or more additional client devices. For example, a given client device that is a mobile phone can be in an environment with a smart watch of the user, a standalone interactive speaker, and a smart camera. In some of those implementations, the system can select one or more of the one or more additional client devices to use in generating one or more additional candidate text representations of the spoken utterance. For example, the system can select one or more of the additional client devices based on historical interactions with one or more client devices, based on the hardware and/or software capabilities of the one or more additional client devices, etc. For instance, the system can select an additional client device based on data indicating that the additional client device includes a locally stored ASR model, used in ASR by the additional client device, that is more robust, more accurate, and/or newer than a local ASR model of the given client device. Additionally or alternatively, the system can select an additional client device based on previous interactions between the user and the additional client device. For instance, the system can select an additional client device based on the additional client device having received more queries from the user (and thus more opportunities for the user to provide feedback to the ASR model). In some of those implementations, the ASR model at the additional client device more frequently used by the user can be better tailored to the voice of the user and may generate more accurate candidate text representations of a spoken utterance.

As also mentioned above, in some implementations the text representation of the spoken utterance is generated based on the candidate text representation of the spoken utterance generated at the given client device and based on one or more additional candidate text representations of the spoken utterance generated at one or more corresponding additional client devices. For example, the system can randomly (or pseudo-randomly) select one or more of the candidate text representations of the spoken utterance as the text representation of the spoken utterance, the system can select the text representation of the spoken utterance based on historical interactions between the given client device and the one or more additional client devices, the system can select the text representation of the spoken utterance based on the hardware and/or software configuration of the given client device and/or of the one or more additional client devices, the system can select the text representation based on whether additional or alternative conditions are satisfied, the system can select the text representation of the spoken utterance based on those word piece(s) that are most frequent and/or highest confidence amongst the candidate text representations, the system can select the text representation of the spoken utterance based on highest confidence candidate text representation(s), and/or combinations thereof.

For example, the system can select a first additional candidate text representation generated using a first additional client device as the text representation of the spoken utterance based on historical interactions, between the given client device and the first additional client device, indicating that the first additional client device more frequently generates candidate text representations that are accurate. Additionally or alternatively, the system can select a second additional candidate text representation, that is generated using a second additional client device, as the text representation of the spoken utterance based on quality metric and/or other metric(s) associated with the ASR model that is local to the second additional client device and utilized in generating the second additional candidate text representation.

Accordingly, various implementations set forth techniques for generating a text representation of a spoken utterance based instances of local speech recognition that are each performed by a corresponding one of multiple client devices in an environment. Using device arbitration techniques, a single client device in the environment with a user can be selected to generate a text representation of a spoken utterance spoken by the user. However, one or more additional client devices in the environment can generate a more accurate text representation of the spoken utterance. For instance, a first additional client device can have a newer and/or more robust and/or accurate version of the ASR model than the selected client device, a second additional client device can capture the spoken utterance in an instance of audio data containing less noise than the instance of audio data captured by the selected client device, etc. Thus, implementations disclosed herein can at least selectively leverage the additional client device(s) in performing local speech recognition, and at least selectively utilize at least part of the additional candidate text representation(s), generated from the local speech recognition(s), in generating a final text representation of the spoken utterance. These and other implementations can result in occurrences of more accurate and/or more robust speech recognition. This enables more efficient human/computer interactions since the speech recognition is more likely to be accurate and downstream process(es) (e.g., natural language understanding) that rely on the recognition can be performed more accurately in view of the more accurate speech recognition. Accordingly, occurrences of a user needing to repeat spoken utterances, due to failure of speech recognition, are reduced. This reduces the overall duration of human/computer interactions and, as a result, reduces the network and/or computational resources that would otherwise be required for a prolonged interaction.

Various implementations disclosed herein are directed towards selectively selecting one or more additional client devices in the environment with a given client device for generating one or more corresponding additional candidate text representations of the spoken utterance, where the text representation of the spoken utterance can be generated based on the candidate text representation generated using the given client device and the one or more candidate text representations generated using the corresponding one or more additional client devices. Put another way, some implementations disclosed herein don't always leverage additional client device(s) for generating additional candidate text representation(s) and/or don't always leverage all available additional client device(s) for generating additional candidate text representation(s). Rather, some implementations may only selectively utilize any additional client device(s) for generating additional candidate text representation(s) and/or may selectively utilize only some additional client device(s) for generating additional candidate text representation(s). Those implementations can instead determine, based on one or more criteria, whether and/or which additional client device(s) to utilize. Consideration of such criteria can be in an effort to balance the desire for more accurate speech recognition (and the resulting computational resource conservation network resource conservation, and/or system latency) with the usage of computational and/or network resource(s) that are required for the more accurate speech recognition. In these and other manners, computing resources (e.g., battery power, power, processor cycles, memory, etc.) can be conserved by only selectively determining to generate one or more additional candidate text representations of the spoken utterance.

As one example, the given client device can determine a hotword confidence score indicating the probability the spoken utterance includes a hotword, and utilize the hotword confidence score in determining whether to utilize additional client device(s) for speech recognition and/or how many additional client device(s) to utilize. For instance, the given client device can determine the hotword confidence score satisfies a threshold value necessary for invoking an automated assistant, but that the hotword confidence score fails to satisfy a second threshold (*e.g.,* is less than 5% above the threshold). This can potentially indicate a poor quality audio data stream capturing the spoken utterance. In some of those implementations, the system can determine to generate one or more additional candidate text representations of the spoken utterance using one or more corresponding additional client devices based on the identified weaker confidence in the hotword. Utilizing additional candidate text representations of the spoken utterance can increase the accuracy of the text representation of the spoken utterance. In some cases, this can prevent the system from generating an incorrect text representation of the spoken utterance, which can in turn prevent the user from having to repeat the spoken utterance.

As another example, the system can determine that, in addition to determining the hotword confidence score satisfies a threshold value, the given client device can determine the hotword confidence score indicates a very strong confidence in the hotword (*e.g.,* it is 10% or more above the threshold). For example, the given client device may determine that the hotword confidence score comfortably satisfies the threshold value, which may indicate a good quality audio data stream capturing the spoken utterance. In some of those implementations, the system may not utilize any of the additional client devices to generate one or more corresponding additional candidate text representations of the spoken utterance. This selective usage of the one or more additional client devices to generate one or more additional corresponding candidate text representations of the spoken utterance can additionally or alternatively conserve computing resources necessary to generate the one or more additional candidate text representations of the spoken utterance in situations where the system is confident in the quality of the audio data stream capturing the spoken utterance.

Techniques are described herein with respect to using an ASR model to generate a text representation of a spoken utterance. However, this is not meant to be limiting. In some implementations, techniques described herein can additionally or alternatively (in embodiments not encompassed by the claimed invention) be used to determine an intent of a spoken utterance and/or to determine parameter(s) for the intent, based on processing a text representations, of a spoken utterance, using local natural language understanding (NLU) model(s).

The above description is provided only as an overview of some implementations disclosed herein. These and other implementations of the technology are disclosed in additional detail below.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

FIG. 1 illustrates an example of a user in an environment with a plurality of client devices in accordance with various implementations disclosed herein.
FIG. 2 illustrates an example of generating a text representation of a spoken utterance using a client device, a first additional client device, and a second additional client device in accordance with various implementations disclosed herein.
FIG. 3 illustrates an example environment in which various implementations disclosed herein may be implemented.
FIG. 4 is a flowchart illustrating an example process of generating a text representation of a spoken utterance in accordance with various implementations disclosed herein.
FIG. 5 is a flowchart illustrating an example process of selecting a subset of one or more additional client devices in accordance with various implementations disclosed herein.
FIG. 6 is a flowchart illustrating an example process of generating an additional candidate text representation of a spoken utterance in accordance with various implementations disclosed herein.
FIG. 7 is a flowchart illustrating another example process of generating a text representation of a spoken utterance in accordance with various implementations disclosed herein.
FIG. 8 illustrates another example environment in which various implementations disclosed herein may be implemented.
FIG. 9 illustrates an example architecture of a computing device.

### Detailed Description

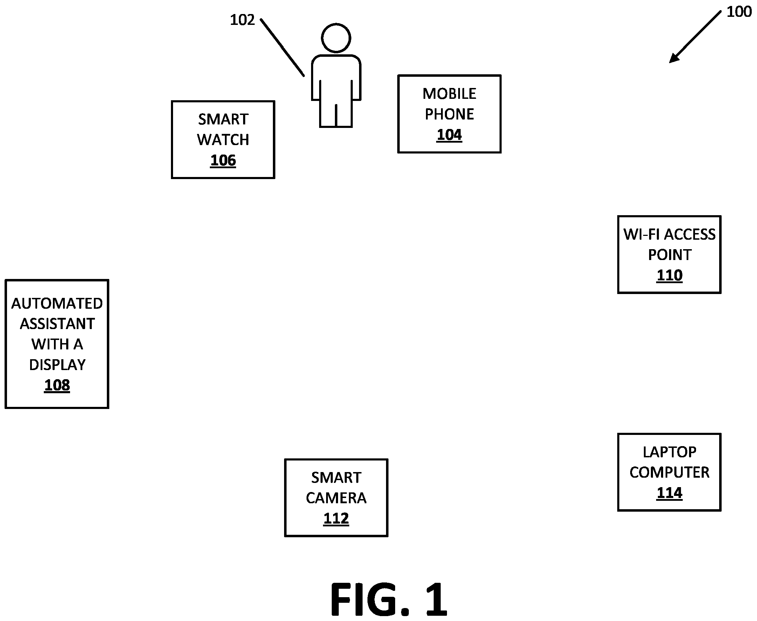

FIG. 1 illustrates a user in an example environment 100 with a plurality of client devices. In the illustrated example, the user 102 is in the environment 100 with a mobile phone 104, a smart watch 106, an automated assistant with a display 108, a Wi-Fi access point 110, a smart camera 112, and a laptop computer 114. The client devices in environment 100 are merely illustrative, and the user can be in an environment with one or more additional and/or alternative client devices. For example, the environment can include one or more of a desktop computer, a laptop computer, a tablet computing device, a mobile phone, a smart watch, one or more additional or alternative wearable computing devices, a standalone interactive speaker, an automated assistant with an integrated display, a Wi-Fi access point, a smart thermostat, a smart oven, a smart camera, one or more additional or alternative smart computing devices, one or more additional or alternative computing devices, and/or combinations thereof.

In some implementations, the client devices in the environment with the user can execute an instance of an automated assistant client. For example, the smart watch 106 can execute an instance of the automated assistant client, the mobile phone 104 can execute an instance of the automated assistant client, the automated assistant with a display 108 can execute an instance of the automated assistant client, the Wi-Fi access point 110 can execute an instance of the automated assistant client, the smart camera 112 can an instance of the automated assistant client, and/or the laptop computer 114 can execute an instance of the automated assistant client.

In some implementations, different client devices can each include different hardware and/or software configurations. For example, the microphone of mobile phone 104 may be better than the microphone of the smart watch 106. This can lead to the mobile phone 104 capturing a higher quality audio data stream compared to an additional audio data stream captured using the smart watch 106. Additionally or alternatively, the ASR model of the laptop computer 114 may generate more accurate candidate text predictions than the ASR model of the smart camera 112.

As an illustrative example, the user 102 can speak a spoken utterance of "Hey Assistant, turn on all the lights". One or more of the client devices in the environment 100 can capture audio data capturing the spoken utterance. Different factors can impact the quality of the audio data captured at each of the one or more client devices. In some implementations, the pose of the user (e.g., the position and/or the orientation of the user) in the environment with respect to the client devices can impact the quality of audio data captured at one or more of the client devices. For example, a client device in front of a user may capture a higher quality audio data stream of the spoken utterance compared to a client device behind the user.

Additionally or alternatively, a source of noise in the environment (e.g., a barking dog, a white noise machine, audio data from a television, one or more additional users speaking, one or more additional or alternative sources of noise, and/or combinations thereof) can impact the quality of the audio data stream captured at the client devices. For example, a dog may be barking in the environment while the user is speaking the spoken utterance. The pose of the dog in the environment (e.g., the position and/or orientation of the dog) with respect to the client devices can impact the quality of audio data captured at one or more of the client devices. For example, the client device closest to the dog may capture a lower quality audio data stream compared to a client device further away from the dog. In other words, the audio data stream captured by the device closest to the dog may capture a higher percentage of the barking dog and a lower percentage of the spoken utterance compared to one or more of the other client devices in the environment. Additional and/or alternative factors can impact the quality of the audio data stream captured at the client devices in the environment.

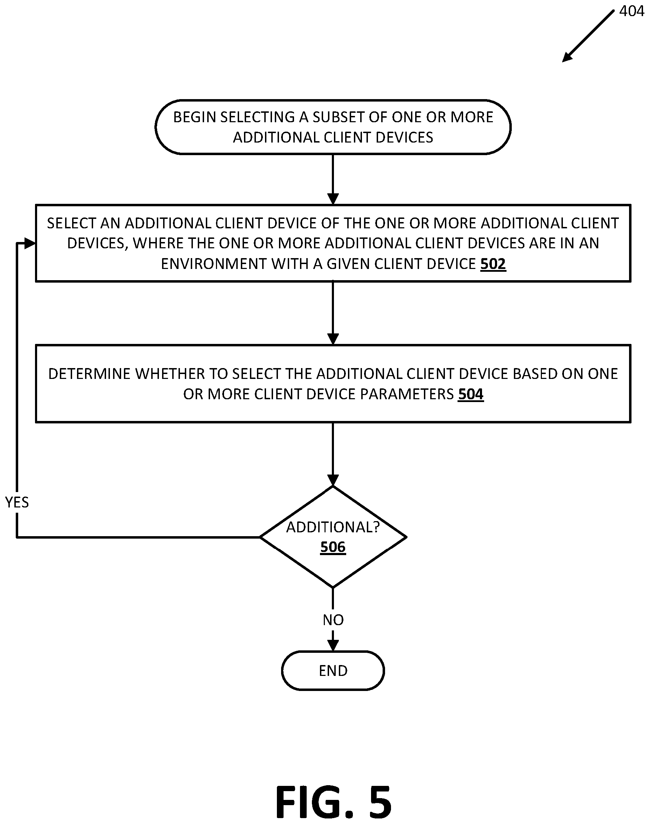

In some implementations, the system can determine the given client device from the client devices in the environment. For example, the system can select the mobile phone 104 as the given client device and can generate a candidate text representation of the spoken utterance by processing the audio data capturing the spoken utterance using an ASR model local to the mobile phone 104. Additionally or alternatively, the system can select a subset of additional client devices in the environment to generate corresponding additional candidate text representations of the spoken utterance. In some implementations, the system can select the one or more additional client devices in accordance with process 404 of FIG. 5 as described herein. For example, the system can select a subset of the automated assistant with a display 108, the smart camera 112, and the laptop computer 114.

In some implementations, the system can determine whether to transmit the audio data capturing the spoken utterance captured at the given client device to the selected subset of the additional client devices. In some implementations, the system can determine whether to transmit the audio data captured at the given client device to one or more of the subset of the additional client devices. Additionally or alternatively, the system can transmit the audio data capturing the spoken utterance captured at the given client device to one or more additional client devices in a variety of manners. For example, the system can transmit a compressed version of the audio data (e.g., generated by processing the audio data using a lossy and/or lossless audio compression), can transmit an encrypted version of the audio data, can transmit the audio data in a streaming manner (e.g., in real time or near real time as the utterance is being spoken to minimize latency), an unprocessed version of the audio data, and/or combinations thereof.

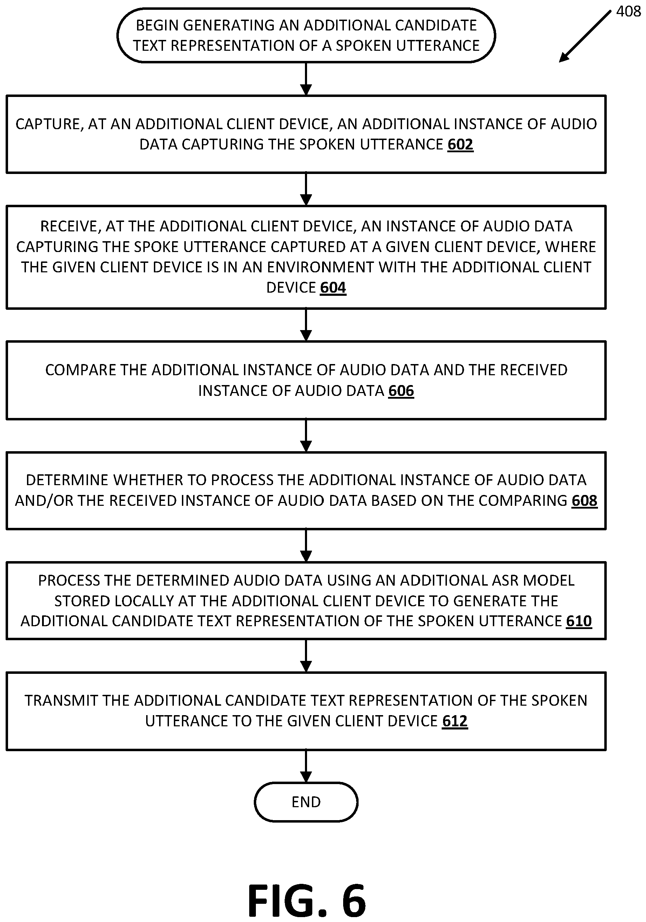

In some implementations, the system can generate one or more additional candidate text representations of the spoken utterance. For each additional client device in the subset of client devices, the client device can determine whether to generate a corresponding additional candidate text representation based on the audio data captured at the given client device and/or the audio data captured at the corresponding additional client device. In some implementations, the additional client device can generate a corresponding additional candidate text representation of the utterance by processing the selected audio data using an ASR model local at the corresponding additional client device. In some implementations, the system can generate the one or more additional candidate text representations of the spoken utterance in accordance with process 408 of FIG. 6 described herein. For example, the system can generate a first additional candidate text representation of the spoken utterance by processing audio data at an ASR model local to the automated assistant with a display 108, a second additional candidate text representation of the spoken utterance by processing audio data at an ASR model local to the smart camera 112, and a third candidate text representation of the spoken utterance by processing audio data at an ASR model local to the laptop computer 114.

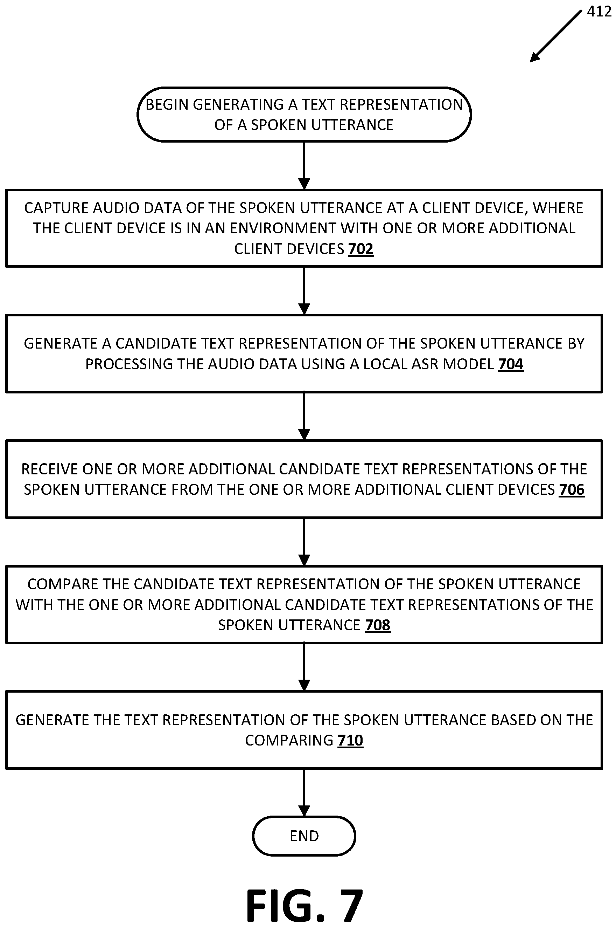

In some implementations, the given client device can generate the text representation of the spoken utterance based on the candidate text representations of the spoken utterance. In some implementations, the system can generate the text representation of the spoken utterance in accordance with process 412 of FIG. 7 as described herein. For example, the system can generate the text representation of the spoken utterance based on the candidate text representation generated using mobile phone 104, the first additional candidate text representation generated using the automated assistant with a display 108, the second additional candidate text representation generated using the smart camera 112, and/or the third additional candidate text representation generated using the laptop computer 114.

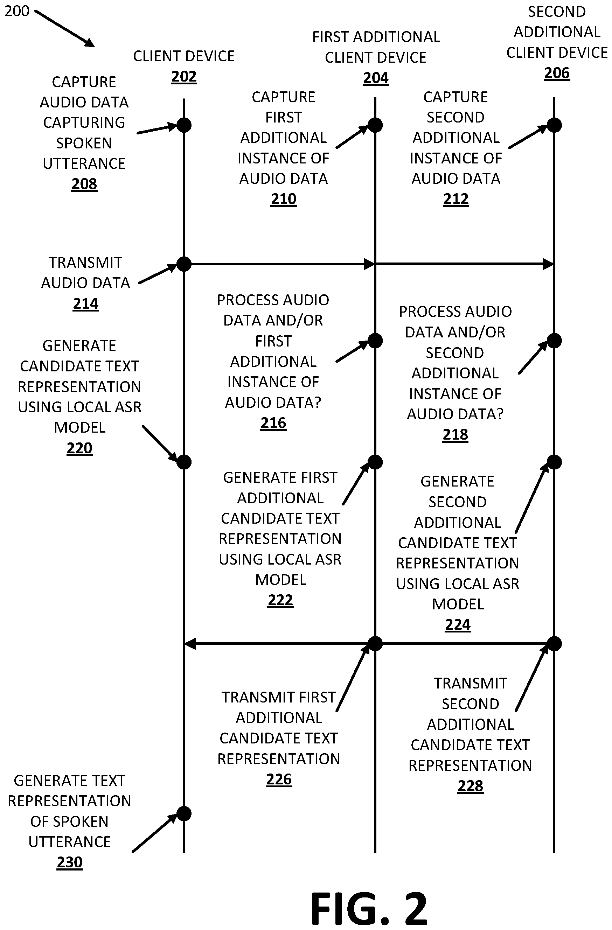

FIG. 2 illustrates an example 200 of generating a candidate text representation of a spoken utterance in accordance with various implementations. The illustrated example 200 includes client device 202, first additional client device 204, and second additional client device 206 in an environment with a user. For example, the client device can be a mobile phone of the user, the first additional client device can be an automated assistant with a display, and the second additional client device can be a smart camera. In some implementations, client device 202, first additional client device 204, and/or second additional client device 206 can each execute an instance of an automated assistant client.

At point 208, the client device 202 can capture audio data capturing a spoken utterance. For example, the client device 202 can capture a spoken utterance of "set the temperature to 72 degrees". In some implementations, at point 210 the first additional client device 204 can capture a first additional instance of audio data capturing the spoken utterance. For example, the first additional client device can capture a first additional instance of the spoken utterance of "set the temperature to 72 degrees". Additionally or alternatively, at point 212 the second additional client device 206 can capture a second additional instance of audio data capturing the spoken utterance. For example, the second additional client device can capture a second additional instance of the spoken utterance of "set the temperature to 72 degrees".

In some implementations, different quality of audio data captured at the client device, the first additional client device and/or the second additional client device. For example, one of the client devices may have a better quality microphone(s), thus enabling the corresponding client device to capture a higher quality audio data stream. Additionally or alternatively, background noise (e.g., an additional user speaking, a dog barking, noise generated by an electronic device, a baby crying, the audio from a television, additional or alternative source(s) of noise, and/or combinations thereof) may be captured in one or more of the audio data streams. In some implementations, more background noise can be captured at one client device compared to another client device. For example, a dog may be closer to the first additional client device than the second additional client device, and the first additional instance of audio data capturing the spoken utterance can capture more of the dog barking compared to the second additional instance of the audio data capturing the spoken utterance. In some implementations, one or more of the client devices may not have the user interface input capabilities necessary to capture audio data (e.g., the client device does not have a microphone) and therefore the client device(s) may not capture corresponding audio data at points 208, 210, and/or 212.

In some implementations, at point 214, client device 202 can transmit the audio data capturing the spoken utterance (i.e., the audio data captured using the client device 202 at point 208) to the first additional client device 204 and/or to the second additional client device 206. In some other implementations, client device 202 may not transmit audio data to the first additional client device 204 and/or the second additional client device 206 (not depicted). For example, the client device 202 may not transmit the audio data capturing the spoken utterance based on an indication the audio data is poor quality.

At point 216, the first additional client device 204 can determine whether to process the audio data captured at the client device 202 and/or the first additional instance of audio data captured at point 212. In some implementations, the first additional client device 204 can determine whether to process the audio data and/or the first additional instance of audio data in accordance with process 408 of FIG. 6 described herein. Similarly, at point 218, the second additional client device 206 can determine whether to process the audio data captured at the client device 202 and/or the second additional instance of audio captured at point 212. In some implementations, the second additional client device 206 can determine whether to process the audio data and/or the second additional instance of audio data in accordance with process 408 of FIG. 6 described herein.

At point 220, the client device 202 generates a candidate text representation of the spoken utterance. In some implementations, the client device 202 generates the candidate text representation of the spoken utterance by processing the captured audio data capturing the spoken utterance using an ASR model stored locally at the client device 202. In some implementations, the first additional client device 204 generates a first additional candidate text representation of the spoken utterance at point 222. In some implementations, the first additional candidate text representation of the spoken utterance is generated by processing the audio data and/or the first additional instance of audio data using an ASR model stored locally at the first additional client device. In some implementations, the first additional candidate text representation of the spoken utterance can be generated in accordance with process 408 of FIG. 6 described herein. Similarly, at point 224, a second additional candidate text representation of the spoken utterance can be generated using the second additional client device 206. In some implementations, the second additional candidate text representation of the spoken utterance can be generated by processing the audio data and/or the second additional instance of audio data using an ASR model stored locally at the second additional client device.

At point 226, the first additional client device 204 can transmit upon request from the client device 202 the first additional candidate text representation of the spoken utterance to client device 202. Similarly, at point 228, the second additional client device 206 can transmit the second additional candidate text representation of the spoken utterance to client device 202.

At point 230, the client device 202 generates a text representation of the spoken utterance. In some implementations, the client device 202 generates the text representation of the spoken utterance based on the candidate text representation of the spoken utterance, the first additional candidate text representation of the spoken utterance (when requested), and/or the second additional candidate text representation of the spoken utterance. In some implementations, the client device 202 can generate the text representation of the spoken utterance in accordance with process 412 of FIG. 7 described herein.

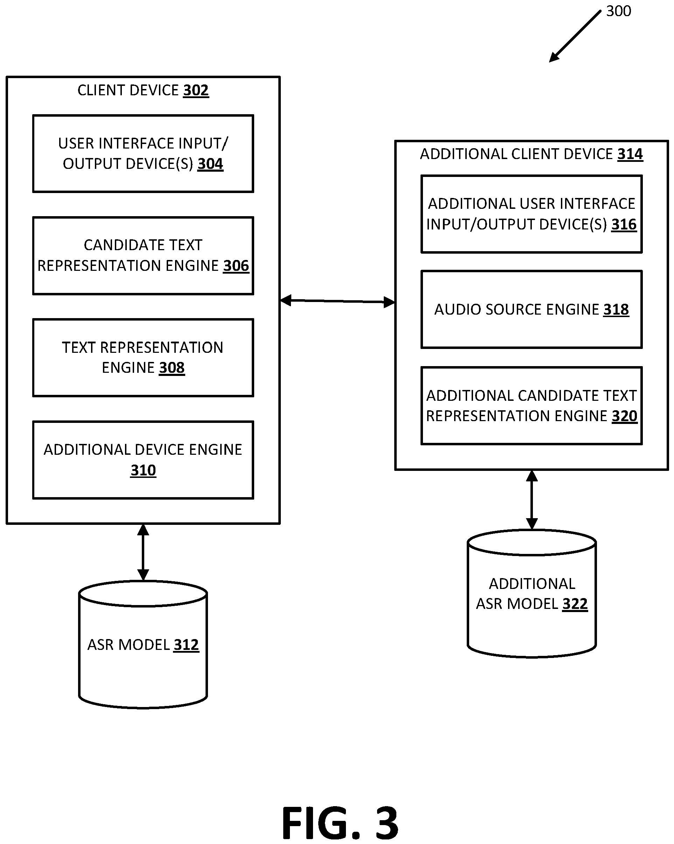

FIG. 3 illustrates a block diagram of an example environment 300 in which implementations disclosed herein may be implemented. The example environment 300 includes client device 302 and additional client device 314. Client device 302 can include user interface input/output device(s) 304, candidate text representation engine 306, text representation engine 308, additional device engine 310, additional or alternative engine(s) (not depicted), ASR model 312, and/or additional or alternative model(s) (not depicted). Additional client device 314 can include additional user interface input/output device(s) 316, audio source engine 318, additional candidate text representation engine 320, additional or alternative engine(s) (not depicted), additional ASR model 322, and/or additional or alternative model(s) (not depicted).

In some implementations, client device 302 and/or additional client device 314 may include may include user interface input/output devices, which may include, for example, a physical keyboard, a touch screen (*e.g.,* implementing a virtual keyboard or other textual input mechanisms), a microphone, a camera, a display screen, and/or speaker(s). For example, a mobile phone of the user may include the user interface input output devices; a standalone digital assistant hardware device may include the user interface input/output device; a first computing device may include the user interface input device(s) and a separate computing device may include the user interface output device(s); etc. In some implementations, all or aspects of client device 302 and/or additional client device 314 may be implemented on a computing system that also contains the user interface input/output devices.

Some non-limiting examples of client device 302 and/or additional client device 314 include one or more of: a desktop computing device, a laptop computing device, a standalone hardware device at least in part dedicated to an automated assistant, a tablet computing device, a mobile phone computing device, a computing device of a vehicle (e.g., an in-vehicle communications system, and in-vehicle entertainment system, an in-vehicle navigation system, an in-vehicle navigation system), or a wearable apparatus of the user that includes a computing device (*e.g.,* a watch of the user having a computing device, glasses of the user having a computing device, a virtual or augmented reality computing device). Additional and/or alternative computing systems may be provided. Client device 302 and/or additional client device 314 may include one or more memories for storage of data and software applications, one or more processors for accessing data and executing applications, and other components that facilitate communication over a network. The operations performed by client device 302 and/or additional client device 314 may be distributed across multiple computing devices. For example, computing programs running on one or more computers in one or more locations can be coupled to each other through a network.

In some implementations, client device 302 may include user interface input/output device(s) 304, and additional client device 314 can include additional user interface input/output device(s) 316, which may include, for example, a physical keyboard, a touch screen (*e.g.,* implementing a virtual keyboard or other textual input mechanisms), a microphone, a camera, a display screen, and/or speaker(s). In some implementations client device 302 and/or additional client device 314 may include an automated assistant (not depicted), and all or aspects of the automated assistant may be implemented on computing device(s) that are separate and remote from the client device that contains the user interface input/output devices (*e.g.,* all or aspects may be implemented "in the cloud"). In some of those implementations, those aspects of the automated assistant may communicate with the computing device via one or more networks such as a local area network (LAN) and/or a wide area network (WAN) (*e.g.,* the Internet).

In some implementations, the user interface input/output device(s) 304 can capture audio data capturing a spoken utterance spoken by a user. For example, one or more microphones of the client device 304 can capture audio data capturing the spoken utterance of "Hey Assistant, set an alarm for 8am". In some implementations, candidate text representation engine 306 can process the audio data capturing the spoken utterance using ASR model 312 to generate a candidate text representation of the spoken utterance.

Additionally or alternatively, additional device engine 310 can be used to select a subset of one or more additional client devices in the environment 300, and can be used to determine whether to transmit the audio data captured at the client device 302 to the one or more selected additional client devices, and/or can be used to transmit the audio data capturing the spoken utterance to the one or more selected additional client devices. In some implementations, the additional device engine 310 can select the subset of one or more additional client devices in accordance with process 404 of FIG. 5 as described herein. For example, additional device engine 310 can be used to select the additional client device 314. Additionally or alternatively, additional device engine 310 can determine whether to transmit the audio data captured at the client device 302 to the one or more additional client devices.

In some implementations, text representation engine 308 can be used to generate a text representation of the spoken utterance based on the candidate text representation of the spoken utterance generated using client device 302 and/or one or more additional candidate text representations of the spoken utterance generated using one or more corresponding additional client devices. For example, text representation engine 308 can generate the text representation of the spoken utterance based on the candidate text representation of the spoken utterance generated using client device 302 and/or an additional candidate text representation of the spoken utterance generated using the additional client device 314. In some implementations, the text representation engine 308 can generate the text representation of the spoken utterance in accordance with process 412 of FIG. 7 described herein.

In some implementations, the additional client device 314 can capture an additional instance of audio data capturing the spoken utterance using additional user interface input/output device(s) 316. For example, the additional client device 314 can capture an additional instance of the spoken utterance of "Hey Assistant, set an alarm for 8am" using one or more additional microphones of the additional client device. In some implementations, the additional client device 314 can use the audio source engine 318 to determine whether to process the audio data capturing the spoken utterance generated using client device 302 and/or the additional audio data capturing the spoken utterance generated using additional client device 314 to generate an additional candidate text representation of the spoken utterance. In some implementations, additional client device 314 can use additional candidate text representation engine 320 to generate an additional candidate text representation of the spoken utterance by processing the audio data selected using audio source engine 318 using additional ASR model 322. In some implementations, the additional candidate text representation engine 320 can generate the additional candidate text representation of the spoken utterance in accordance with process 408 of FIG. 6 described herein.

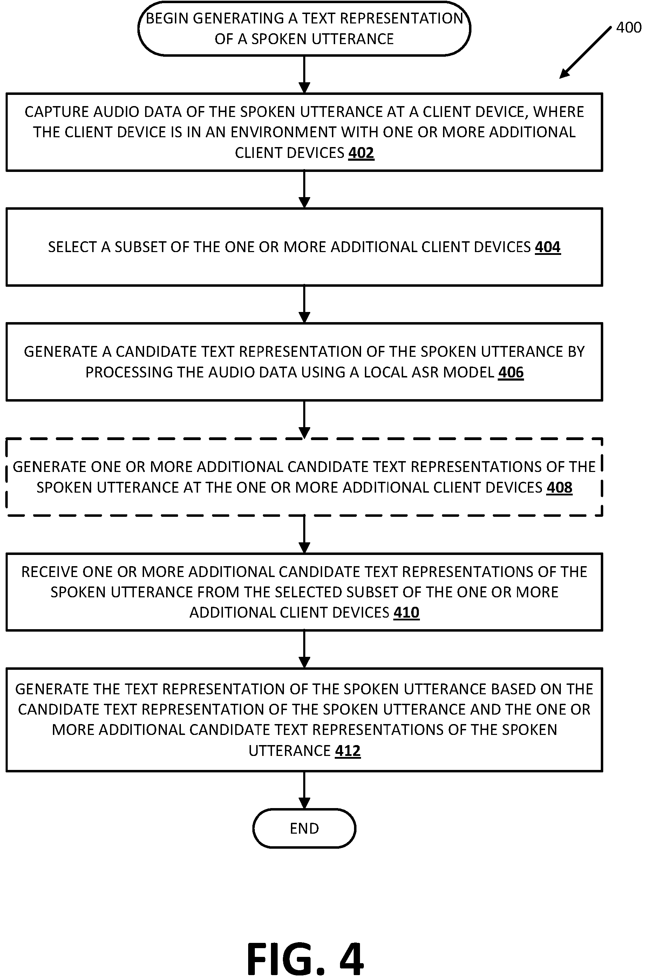

FIG. 4 is a flowchart illustrating an example process of 400 of generating a candidate text representation of a spoken utterance in accordance with various implementations disclosed herein. For convenience, the operations of the flowchart are described with reference to a system that performs the operations. This system may include various components of various computer systems, such as one or more components of client device 302, additional client device 314, client device 802, and/or computing system 810. Moreover, while operations of process 400 are shown in a particular order, this is not meant to be limiting. One or more operations may be reordered, omitted, and/or added.

At block 402, the system captures audio data of a spoken utterance at a client device, where the client device is in an environment with one or more additional client devices. In some implementations, the client device and/or the additional client devices can execute a corresponding instance of an automated assistant client. In some implementations, a user can be in a room with several client devices, such as a mobile phone, a laptop computer, a standalone automated assistant, etc. In some implementations, when two or more client devices can capture a spoken utterance spoken by a user, classical device arbitration techniques can be used to determine a given client device used to process the spoken utterance. For example, the audio data capturing the spoken utterance can be captured at a given client device of a standalone interactive speaker and the standalone interactive speaker can be in an environment with a first additional client device of a mobile phone and a second additional client device of a smart camera.

At block 404, the system selects a subset of the one or more additional client devices. In some implementations, the system can select a subset of the one or more additional client devices in accordance with process 404 as illustrated in FIG. 5. For example, the system can select the first additional client device of the mobile phone, the second additional client device of the smart camera, or the first additional client device of the mobile phone and the second additional client device of the smart camera.

At block 406, the system generates a candidate text representation of the spoken utterance by processing the captured audio data using a local ASR model. In some implementations, the candidate text representation of the spoken utterance can be the top ranking hypothesis generated using the ASR model. Additionally or alternatively, the candidate text representation of the spoken utterance can include multiple hypotheses generated using the ASR model.

At block 408, the system (optionally) generates one or more additional candidate text representations of the spoken utterance at the one or more additional client devices. In some implementations, the system can generate one or more additional candidate text representations at the one or more additional client devices in accordance with process 408 as illustrated in FIG. 6. For example, the system can generate a first additional candidate text representation of the spoken utterance using a first additional ASR model stored locally at the first additional client device and/or the system can generate a second additional candidate text representation of the spoken utterance using a second additional ASR model stored locally at the second additional client device.

At block 410, the system receives one or more additional candidate text representations of the spoken utterance from the selected subset of the one or more additional client devices. For example, if the system selects a first additional client device and a second additional client device at block 404, the system can receive a first additional candidate text representation generated at the first additional client device (e.g., generated in accordance with process 408 of FIG. 6) and a second additional candidate text representation generated at the second additional client device (e.g., generated in accordance with process 408 of FIG. 6).

At block 412, the system generates the text representation of the spoken utterance based on the candidate text representation of the spoken utterance and the one or more additional candidate text representations of the spoken utterance. In some implementations, the system can generate the text representation of the spoken utterance based on the candidate text representation and the one or more additional candidate text representations in accordance with process 412 of FIG. 7.

FIG. 5 is a flowchart illustrating an example process of 404 of selecting a subset of one or more additional client devices in accordance with various implementations disclosed herein. For convenience, the operations of the flowchart are described with reference to a system that performs the operations. This system may include various components of various computer systems, such as one or more components of client device 302, additional client device 314, client device 802, and/or computing system 810. Moreover, while operations of process 404 are shown in a particular order, this is not meant to be limiting. One or more operations may be reordered, omitted, and/or added.

At block 502, the system selects an additional client device of the one or more additional client devices, where the one or more additional client devices are in an environment with a given client device. For example, a given client device can be in an environment with a first additional client device, a second additional client device, and a third additional client device.

At block 504, the system determines whether to select the additional client device based on one or more client device parameters. In some implementations, the one or more client device parameters can include a power source of the client device, hardware of the client device (e.g., whether the client device has microphone(s), the processor, the available memory, etc.), software of the client device (e.g., the ASR model version, the ASR model size, the ASR model capacity, one or more additional or alternative model versions, etc.), one or more additional or alternative device parameters, and/or combinations thereof. For example, in some implementations, the system can include each of the one or more additional client devices in the subset.

In some implementations, the system can select each of the one or more additional client devices which is powered by being plugged into an electrical outlet (e.g., each client device which runs off alternating current). In other words, the system can select the additional client device(s) when the power costs are negligible. In some implementations, the system can select an additional client device if the battery power of the client device satisfies one or more conditions. For example, the system can select an additional client device if the remaining battery power exceeds a threshold value (e.g., the battery has more than 25% power remaining), if the capacity of the battery exceeds a threshold value (e.g., the battery capacity exceeds 1000 mAh), if the battery is currently charging, if additional or alternative condition(s) are satisfied, and/or combinations thereof. In some implementations, the system can select an additional client device based on the hardware of the additional client device. For example, the system can process the hardware of each of the one or more additional client devices using a machine learning model to select the subset of the one or more client devices.

In some implementations, the system can select an additional client device based on whether the additional client device was previously selected in a prior iteration of the process. For example, the system can select the first additional client device and not select the second additional client device if the system determines the first additional client device was selected and the second additional client device was not selected when processing a previous spoken utterance.

The system can determine a confidence value indicating the confidence of the candidate text representation generated using the ASR model at the client device. In some implementations, the system can determine whether the confidence value satisfies one or more conditions, such as whether the confidence value satisfies a threshold value. The system can select one or more additional client devices when the confidence value indicates a low confidence in the candidate text representation. For example, the system can select one or more additional client devices when the confidence value is below threshold value.

At block 506, the system determines whether to select a further additional client device. In some implementations the system can determine whether to select a further additional client device based on whether there are any remaining unused additional client devices, whether a threshold number of additional client devices have been selected, whether one or more additional or alternative conditions are satisfied and/or combinations thereof. If so, the system proceeds back to block 502, selects a further additional client device and proceeds to block 504 based on the further additional client device. If not, the process ends.

FIG. 6 is a flowchart illustrating an example process of 408 of generating an additional candidate text representation of a spoken utterance in accordance with various implementations disclosed herein. For convenience, the operations of the flowchart are described with reference to a system that performs the operations. This system may include various components of various computer systems, such as one or more components of client device 302, additional client device 314, client device 802, and/or computing system 810. Moreover, while operations of process 408 are shown in a particular order, this is not meant to be limiting. One or more operations may be reordered, omitted, and/or added.

At block 602, at an additional client device, the system captures an additional instance of audio data capturing the spoken utterance. For example, the additional client device can capture a spoken utterance of "Hey Assistant, what is the temperature on Tuesday".

At block 604, at the additional client device, the system receives an instance of audio data capturing the spoken utterance captured at a given client device, where the given client device is in an environment with the additional client device. For example, the additional client device can receive audio data captured at the given client device capturing the spoken utterance of "Hey Assistant, what is the temperature on Tuesday".

At block 606, the system compares the additional instance of audio data and the received instance of audio data.

At block 608, the system determines whether to process the additional instance of audio data and/or the received instance of audio data based on the comparison. In some implementations, the system can randomly (or pseudo randomly) select the instance of audio data or the additional instance of audio data for processing. In some implementations, the system can select both the instance of audio data and the additional instance of audio data. In some implementations, the system can select audio data for processing based on the quality of the audio data. For example, the system can select the additional instance of audio data or the instance of audio data based on the microphone of the additional client device and/or the microphone of the given client device. For example, the system can select the additional instance of audio data when the microphone of the additional client device captures better quality audio data than the microphone of the given client device.

Additionally or alternatively, the system can determine a signal to noise ratio for the instance of audio data and an additional signal to noise ratio for the additional instance of audio data. The system can select the instance of audio data with the signal to noise ratio indicating a better quality audio data stream. Additional or alternative perceptual quality metrics can be utilized in determining the better quality audio data stream. For instance, a machine learning model which has been trained to predict the quality level of an audio data stream can be utilized in selecting the audio data stream.

At block 610, the system processes the determined audio data using an additional ASR model stored locally at the additional client device to generate the additional candidate text representation of the spoken utterance. For example, if the additional instance of audio data is selected for processing, the system can generate an additional candidate text representation of the spoken utterance by processing the additional instance of audio data using the additional ASR model stored locally at the additional client device. As a further example, if the instance of audio data is selected for processing, the system can generate an additional candidate text representation of the spoken utterance by processing the instance of audio data using the additional ASR model stored locally at the additional client device.

At block 612, the system when requested by the given client device, transmits the additional candidate text representation of the spoken utterance to the given client device.

FIG. 7 is a flowchart illustrating an example process of 412 of generating a text representation of a spoken utterance in accordance with various implementations disclosed herein. For convenience, the operations of the flowchart are described with reference to a system that performs the operations. This system may include various components of various computer systems, such as one or more components of client device 302, additional client device 314, client device 802, and/or computing system 810. Moreover, while operations of process 412 are shown in a particular order, this is not meant to be limiting. One or more operations may be reordered, omitted, and/or added.

At block 702, the system captures audio data of the spoken utterance at a client device, where the client device is in an environment with one or more additional client devices. For example, a standalone interactive speaker can capture audio data capturing the spoken utterance of "Hey Assistant, turn off the living room lights", where the standalone interactive speaker is in an environment with a mobile phone, and a smart television.

At block 704, the system generates a candidate text representation of the spoken utterance by processing the audio data at the client device using a local ASR model. For example, the system can process the audio data capturing the spoken utterance of "Hey Assistant, turn off the living room lights" using an ASR model local to the standalone interactive speaker to generate a candidate text representation of the spoken utterance. In some implementations, the system can generate a candidate text representation of the spoken utterance using the local ASR model. Additionally or alternatively, the system can generate multiple hypotheses of the text representation of the spoken utterance using the local ASR model.

At block 706, the system receives one or more candidate text representations of the spoken utterance from the one or more additional client devices. For example, the system can receive a first additional candidate text representation of the spoken utterance of "Hey Assistant, turn off the living room lights" from the mobile phone, and a second additional candidate text representation of the spoken utterance of "Hey Assistant, turn off the living room lights" from the smart television. In some implementations, the one or more additional candidate text representation can be generated using the one or more additional client devices in accordance with process 408 of FIG. 6 as described herein. In some implementations, the system can receive an additional candidate text representation of the spoken utterance from each of the one or more additional client devices using a corresponding local ASR model local to the additional client device. In some other implementations, the system can receive multiple candidate text representations of the spoken utterance from each of the one or more additional client devices generated using a corresponding local ASR model local to the additional client device.

At block 708, the system compares the candidate text representation of the spoken utterance with the one or more additional candidate text representations of the spoken utterance.

At block 710, the system generates the text representation of the spoken utterance based on the comparison. In some implementations, the system can randomly (or pseudo-randomly) select one of the candidate text representations of the spoken utterance as the text representation of the spoken utterance. For example, the system can randomly (or pseudo-randomly) select the candidate text representation of the spoken utterance generated using the first additional client device as the text representation of the spoken utterance. Additionally or alternatively, the system can randomly select (or pseudo-randomly) select the candidate text representation of the spoken utterance generated using the given client device as the text representation of the spoken utterance.

In some implementations, the system can rank the candidate text representations of the spoken utterance, where the candidate text representation of the spoken utterance with the most "votes" can be selected as the text representation of the spoken utterance. For example, the system can compare the candidate text representation of the spoken utterance generated using the given client device of "Hey Assistant, turn *off the* living room lights", a first additional candidate text representation of the spoken utterance generated using the first additional client device of "Hey Assistant, turn *on* the living room lights", and a second additional candidate text representation of the spoken utterance generated using the second additional client device of "Hey Assistant, turn *off* the living room lights". In other words, two of the client devices (e.g., the given client device and the second additional client device) generated the candidate text representation of the spoken utterance of "Hey Assistant, turn *off the* living room lights" while only one of the client devices (e.g., the first additional client devices) generated the candidate the candidate text representation of the spoken utterance of "Hey assistant, turn *on* the living room lights". In some implementations, the candidate text representations of the spoken utterance can be uniformly weighted. For instance, the system can select "Hey Assistant, turn *off* the living room lights" as the text representation of the spoken utterance based on two of the three client devices generating "Hey Assistant, turn *off* the living room lights" as the candidate text representation of the spoken utterance.

In some other implementations, the candidate text representations of the spoken utterance can be weighted based on the client device used in generating the spoken utterance. For example, the candidate text representations of the spoken utterance can be weighted based on the version of the ASR model used in generating the candidate text representation (e.g., the system can weight a candidate text representation of the spoken utterance more heavily when it is generated using a higher quality ASR model), the hardware of the corresponding client device (e.g., the system can weigh a candidate text representation of the spoken utterance more heavily when the corresponding client device captures a higher quality audio data stream), based on one or more additional or alternative conditions, and/or combinations thereof. For instance, a mobile phone may have better hardware such as a better microphone to capture higher quality audio data, and may have a higher quality version of the ASR model. In some implementations, the system may weigh the first additional candidate text representation of the spoken utterance generated using the mobile phone (with a higher quality microphone and higher quality ASR model) more heavily compared to the other candidate text representations of the spoken utterance. In some implementations, the system can select the candidate text representation of "Hey Assistant, turn *on* the living room lights" generated using the mobile phone as the text representation of the spoken utterance despite the other two candidate representations of the spoken utterance indicating to turn off the living room lights.

In some implementations, the system can selectively combine portions of the candidate text representations of the spoken utterance. In some implementations, the system can use one or more candidate text representations generated using the given client device and one or more candidate text representations generated using the one or more additional client devices to collaboratively generate a top-N list of hypotheses. For example, the system can merge lists of hypotheses from the various devices.

In some implementations, the system can determine a confidence score indicating the probability a candidate text representation captures the spoken utterance. For instance, the system can generate a confidence score indicating the probability of the candidate text representation of the spoken utterance, a first additional confidence score indicating the probability the first additional candidate text representation captures the spoken utterance, and a second additional candidate text representation indicating the probability the second additional candidate text representation captures the spoken utterance. In some implementations, the system can determine the text representation of the spoken utterance based on the candidate text representation of the spoken utterance with the highest confidence score.

Additionally or alternatively, the system can generate a confidence score based on one or more portions of a candidate text representation of the spoken utterance. In some implementations, the system can generate a hotword confidence score based on a probability the spoken utterance captures a hotword. For example, the system can generate a hotword confidence score indicating a probability a candidate text representation of the spoken utterance includes the hotword "Hey Assistant".

In some implementations, the system can generate a plurality of candidate text representations using the given client device, a plurality of first additional candidate text representations of the spoken utterance using the first additional client device, and/or a plurality of second additional candidate text representations of the spoken utterance using the second additional client device. In some implementations, the system can determine the text representation of the spoken utterance based on the plurality of candidate text representations of the spoken utterance, the plurality of first additional candidate text representations of the spoken utterance, and/or the plurality of second additional candidate text representations of the spoken utterance in accordance with techniques described herein.

In some implementations, the system can bias one or more of the pluralities of candidate text representations of the spoken utterance. For example, the mobile phone may have the better ASR model, but a list of contacts for biasing may be accessible (or only accessible) via the standalone interactive speaker. In some implementations, the plurality of first additional candidate text representations generated using the mobile phone (i.e., the device with the "better" ASR model) can be biased using the list of contacts stored at the standalone interactive speaker. In some of those implementations, the system can determine the text representation of the spoken utterance based on the biasing.

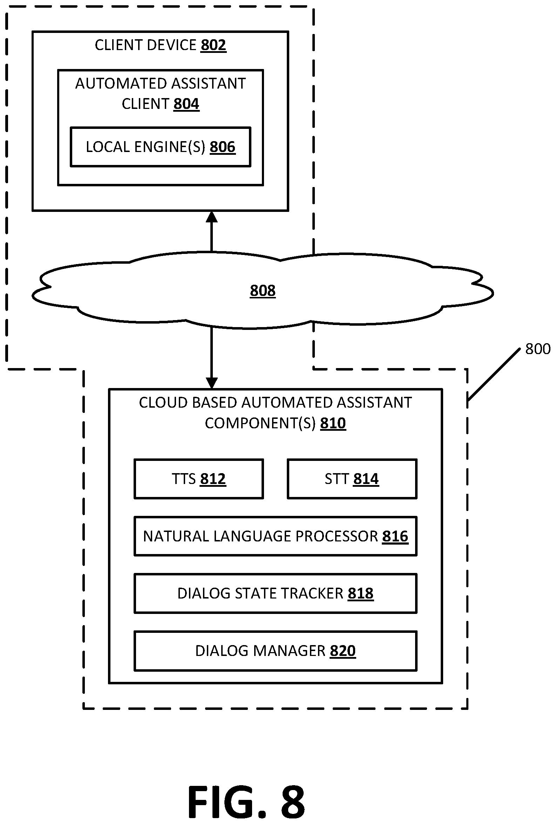

Turning now to FIG. 8, an example environment is illustrated where various implementations can be performed. FIG. 8 is described initially, and includes a client computing device 802, which executes an instance of an automated assistant client 804. One or more cloud-based automated assistant components 810 can be implemented on one or more computing systems (collectively referred to as a "cloud" computing system) that are communicatively coupled to client device 802 via one or more local and/or wide area networks (e.g., the Internet) indicated generally at 808.

An instance of an automated assistant client 804, by way of its interactions with one or more cloud-based automated assistant components 810, may form what appears to be, from the user's perspective, a logical instance of an automated assistant 800 with which the user may engage in a human-to-computer dialog. An instance of such an automated assistant 800 is depicted in FIG. 8. It thus should be understood that in some implementations, a user that engages with an automated assistant client 804 executing on client device 802 may, in effect, engage with his or her own logical instance of an automated assistant 800. For the sakes of brevity and simplicity, the term "automated assistant" as used herein as "serving" a particular user will often refer to the combination of an automated assistant client 804 executing on a client device 802 operated by the user and one or more cloud-based automated assistant components 810 (which may be shared amongst multiple automated assistant clients of multiple client computing devices). It should also be understood that in some implementations, automated assistant 800 may respond to a request from any user regardless of whether the user is actually "served" by that particular instance of automated assistant 800.

The client computing device 802 may be, for example: a desktop computing device, a laptop computing device, a tablet computing device, a mobile phone computing device, a computing device of a vehicle of the user (e.g., an in-vehicle communications system, an in-vehicle entertainment system, an in-vehicle navigation system), a standalone interactive speaker, a smart appliance such as a smart television, and/or a wearable apparatus of the user that includes a computing device (e.g., a watch of the user having a computing device, glasses of the user having a computing device, a virtual or augmented reality computing device). Additional and/or alternative client computing devices may be provided. In various implementations, the client computing device 802 may optionally operate one or more other applications that are in addition to automated assistant client 804, such as a message exchange client (e.g., SMS, MMS, online chat), a browser, and so forth. In some of those various implementations, one or more of the other applications can optionally interface (e.g., via an application programming interface) with the automated assistant 800, or include their own instance of an automated assistant application (that may also interface with the cloud-based automated assistant component(s) 810).

Automated assistant 800 engages in human-to-computer dialog sessions with a user via user interface input and output devices of the client device 802. To preserve user privacy and/or to conserve resources, in many situations a user must often explicitly invoke the automated assistant 800 before the automated assistant will fully process a spoken utterance. The explicit invocation of the automated assistant 800 can occur in response to certain user interface input received at the client device 802. For example, user interface inputs that can invoke the automated assistant 800 via the client device 802 can optionally include actuations of a hardware and/or virtual button of the client device 802. Moreover, the automated assistant client can include one or more local engines 806, such as an invocation engine that is operable to detect the presence of one or more spoken invocation phrases. The invocation engine can invoke the automated assistant 800 in response to detection of one of the spoken invocation phrases. For example, the invocation engine can invoke the automated assistant 800 in response to detecting a spoken invocation phrase such as "Hey Assistant," "OK Assistant", and/or "Assistant". The invocation engine can continuously process (e.g., if not in an "inactive" mode) a stream of audio data frames that are based on output from one or more microphones of the client device 802, to monitor for an occurrence of a spoken invocation phrase. While monitoring for the occurrence of the spoken invocation phrase, the invocation engine discards (e.g., after temporary storage in a buffer) any audio data frames that do not include the spoken invocation phrase. However, when the invocation engine detects an occurrence of a spoken invocation phrase in processed audio data frames, the invocation engine can invoke the automated assistant 800. As used herein, "invoking" the automated assistant 800 can include causing one or more previously inactive functions of the automated assistant 800 to be activated. For example, invoking the automated assistant 800 can include causing one or more local engines 806 and/or cloud-based automated assistant components 810 to further process audio data frames based on which the invocation phrase was detected, and/or one or more following audio data frames (whereas prior to invoking no further processing of audio data frames was occurring).

The one or more local engine(s) 806 of automated assistant 800 are optional, and can include, for example, the invocation engine described above, a local voice-to-text ("STT") engine (that converts captured audio to text), a local text-to-speech ("TTS") engine (that converts text to speech), a local natural language processor (that determines semantic meaning of audio and/or text converted from audio), and/or other local components. Because the client device 802 is relatively constrained in terms of computing resources (e.g., processor cycles, memory, battery, etc.), the local engines 806 may have limited functionality relative to any counterparts that are included in cloud-based automated assistant components 810.

Cloud-based automated assistant components 810 leverage the virtually limitless resources of the cloud to perform more robust and/or more accurate processing of audio data, and/or other user interface input, relative to any counterparts of the local engine(s) 806. Again, in various implementations, the client device 802 can provide audio data and/or other data to the cloud-based automated assistant components 810 in response to the invocation engine detecting a spoken invocation phrase, or detecting some other explicit invocation of the automated assistant 800.

The illustrated cloud-based automated assistant components 810 include a cloud-based TTS module 812, a cloud-based STT module 814, a natural language processor 816, a dialog state tracker 818, and a dialog manager 820. In some implementations, one or more of the engines and/or modules of automated assistant 800 may be omitted, combined, and/or implemented in a component that is separate from automated assistant 800. Further, in some implementations automated assistant 800 can include additional and/or alternative engines and/or modules. Cloud-based STT module 814 can convert audio data into text, which may then be provided to natural language processor 816.

Cloud-based TTS module 812 can convert textual data (e.g., natural language responses formulated by automated assistant 800) into computer-generated speech output. In some implementations, TTS module 812 may provide the computer-generated speech output to client device 802 to be output directly, e.g., using one or more speakers. In other implementations, textual data (e.g., natural language responses) generated by automated assistant 800 may be provided to one of the local engine(s) 806, which may then convert the textual data into computer-generated speech that is output locally.

Natural language processor 816 of automated assistant 800 processes free form natural language input and generates, based on the natural language input, annotated output for use by one or more other components of the automated assistant 800. For example, the natural language processor 816 can process natural language free-form input that is textual input that is a conversion, by STT module 814, of audio data provided by a user via client device 802. The generated annotated output may include one or more annotations of the natural language input and optionally one or more (e.g., all) of the terms of the natural language input.

In some implementations, the natural language processor 816 is configured to identify and annotate various types of grammatical information in natural language input. In some implementations, the natural language processor 816 may additionally and/or alternatively include an entity tagger (not depicted) configured to annotate entity references in one or more segments such as references to people (including, for instance, literary characters, celebrities, public figures, etc.), organizations, locations (real and imaginary), and so forth. In some implementations, the natural language processor 816 may additionally and/or alternatively include a coreference resolver (not depicted) configured to group, or "cluster," references to the same entity based on one or more contextual cues. For example, the coreference resolver may be utilized to resolve the term "there" to "Hypothetical Café" in the natural language input "I liked Hypothetical Café last time we ate there." In some implementations, one or more components of the natural language processor 816 may rely on annotations from one or more other components of the natural language processor 816. In some implementations, in processing a particular natural language input, one or more components of the natural language processor 816 may use related prior input and/or other related data outside of the particular natural language input to determine one or more annotations.

In some implementations, dialog state tracker 818 may be configured to keep track of a "dialog state" that includes, for instance, a belief state of a one or more users' goals (or "intents") over the course of a human-to-computer dialog session and/or across multiple dialog sessions. In determining a dialog state, some dialog state trackers may seek to determine, based on user and system utterances in a dialog session, the most likely value(s) for slot(s) that are instantiated in the dialog. Some techniques utilize a fixed ontology that defines a set of slots and the set of values associated with those slots. Some techniques additionally or alternatively may be tailored to individual slots and/or domains. For example, some techniques may require training a model for each slot type in each domain.

Dialog manager 820 may be configured to map a current dialog state, e.g., provided by dialog state tracker 818, to one or more "responsive actions" of a plurality of candidate responsive actions that are then performed by automated assistant 800. Responsive actions may come in a variety of forms, depending on the current dialog state. For example, initial and midstream dialog states that correspond to turns of a dialog session that occur prior to a last turn (e.g., when the ultimate user-desired task is performed) may be mapped to various responsive actions that include automated assistant 800 outputting additional natural language dialog. This responsive dialog may include, for instance, requests that the user provide parameters for some action (i.e., fill slots) that dialog state tracker 818 believes the user intends to perform. In some implementations, responsive actions may include actions such as "request" (e.g., seek parameters for slot filling), "offer" (e.g., suggest an action or course of action for the user), "select," "inform" (e.g., provide the user with requested information), "no match" (e.g., notify the user that the user's last input is not understood), a command to a peripheral device (e.g., to turn off a light bulb), and so forth.

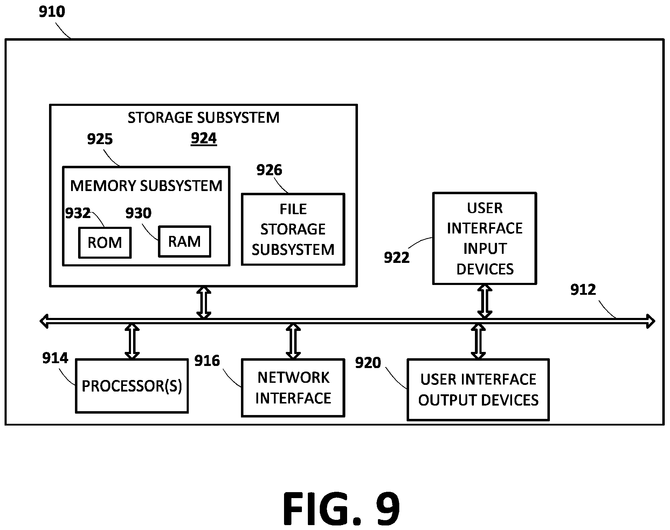

FIG. 9 is a block diagram of an example computing device 910 that may optionally be utilized to perform one or more aspects of techniques described herein. In some implementations, one or more of a client computing device, and/or other component(s) may comprise one or more components of the example computing device 910.

Computing device 910 typically includes at least one processor 914 which communicates with a number of peripheral devices via bus subsystem 912. These peripheral devices may include a storage subsystem 924, including, for example, a memory subsystem 925 and a file storage subsystem 926, user interface output devices 920, user interface input devices 922, and a network interface subsystem 916. The input and output devices allow user interaction with computing device 910. Network interface subsystem 916 provides an interface to outside networks and is coupled to corresponding interface devices in other computing devices.

User interface input devices 922 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computing device 910 or onto a communication network.

User interface output devices 920 may include a display subsystem, a printer, a fax machine, or non-visual displays such as audio output devices. The display subsystem may include a cathode ray tube ("CRT"), a flat-panel device such as a liquid crystal display ("LCD"), a projection device, or some other mechanism for creating a visible image. The display subsystem may also provide non-visual display such as via audio output devices. In general, use of the term "output device" is intended to include all possible types of devices and ways to output information from computing device 910 to the user or to another machine or computing device.

Storage subsystem 924 stores programming and data constructs that provide the functionality of some or all of the modules described herein. For example, the storage subsystem 924 may include the logic to perform selected aspects of one or more of the processes of FIG. 4, FIG. 5, FIG. 6, and/or FIG. 7, as well as to implement various components depicted in FIG. 3 and/or FIG. 8.

These software modules are generally executed by processor 914 alone or in combination with other processors. Memory 925 used in the storage subsystem 924 can include a number of memories including a main random access memory ("RAM") 930 for storage of instructions and data during program execution and a read only memory ("ROM") 932 in which fixed instructions are stored. A file storage subsystem 626 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 926 in the storage subsystem 924, or in other machines accessible by the processor(s) 914.

Bus subsystem 912 provides a mechanism for letting the various components and subsystems of computing device 910 communicate with each other as intended. Although bus subsystem 912 is shown schematically as a single bus, alternative implementations of the bus subsystem may use multiple busses.

Computing device 910 can be of varying types including a workstation, server, computing cluster, blade server, server farm, or any other data processing system or computing device. Due to the ever-changing nature of computers and networks, the description of computing device 910 depicted in FIG. 9 is intended only as a specific example for purposes of illustrating some implementations. Many other configurations of computing device 910 are possible having more or fewer components than the computing device depicted in FIG. 9.

In situations in which the systems described herein collect personal information about users (or as often referred to herein, "participants"), or may make use of personal information, the users may be provided with an opportunity to control whether programs or features collect user information (*e.g.,* information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by one or more processors is provide, the method including detecting, at a client device, audio data that captures a spoken utterance of a user, wherein the client device is in an environment with one or more additional client devices and is in local communication with the one or more additional client devices via a local network, the one or more additional client devices including at least a first additional client device. The method further includes processing, at the client device, the audio data using an automatic speech recognition ("ASR") model stored locally at the client device to generate a candidate text representation of the spoken utterance. The method further includes after determining to transmit a request for a fist additional candidate text representation of the spoken utterance to the first additional client device, and after transmitting the request, receiving, at the client device, from the first additional client device and via the local network, a first additional candidate text representation of the spoken utterance, the first additional candidate text representation of the spoken utterance generated locally at the first additional client device is based on (a) the audio data and/or (b) locally detected audio data capturing the spoken utterance detected at the first additional client device, wherein the first additional candidate text representation of the spoken utterance is generated by processing the audio data and/or the locally generated audio data using a first additional ASR model stored locally at the first additional client device. The method further includes determining, at the client device, a text representation of the spoken utterance based on the candidate text representation of the spoken utterance and the first additional candidate text representation of the spoken utterance generated by the first additional client device.

These and other implementations of the technology can include one or more of the following features.

In some implementations, the one or more additional client devices includes at least the first additional client device and a second additional client device. In some implementations, receiving, at the client device, from the first additional client device and via the local network, the first additional candidate text representation further includes receiving, at the client device, from the second additional client device and via the local network, a second additional candidate text representation of the spoken utterance generated locally at the second additional client device is based on (a) the audio data and/or (b) additional locally detected audio data capturing the spoken utterance detected at the second additional client device, wherein the second additional candidate text representation of the spoken utterance is generated by processing the audio data and/or the additional locally generated audio data using a second additional ASR model stored locally at the second additional client device. In some implementations, determining the text representation of the spoken utterance based on the candidate text representation of the spoken utterance and the first additional candidate text representation of the spoken utterance generated by the first additional client device further includes determining the text representation of the spoken utterance based on the candidate text representation of the spoken utterance, the first additional candidate text representation of the spoken utterance generated by the first additional client device, and the second additional candidate text representation of the spoken utterance generated by the second additional client device.

In some implementations, determining the text representation of the spoken utterance based on the candidate text representation of the spoken utterance and the first additional candidate text representation of the spoken utterance generated by the first additional client device includes randomly selecting either the candidate text representation of the spoken utterance or the first additional candidate text representation of the spoken utterance. In some implementations, the method further includes determining the text representation of the spoken utterance based on the random selection.

In some implementations, determining the text representation of the spoken utterance based on the candidate text representation of the spoken utterance and the first additional candidate text representation of the spoken utterance generated by the first additional client device includes determining a confidence score of the candidate text representation indicating a probability that the candidate text representation is the text representation, where the confidence score is based on one or more device parameters of the client device. In some implementations, the method further includes determining an additional confidence score of the additional candidate text representation indicating an additional probability that the additional candidate text representation is the text representation, where the additional confidence score is based on one or more additional device parameters of the additional client device. In some implementations, the method further includes comparing the confidence score and the additional confidence score. In some implementations, the method further includes determining the text representation of the spoken utterance based on the comparing.

In some implementations, determining the text representation of the spoken utterance based on the candidate text representation of the spoken utterance and the first additional candidate text representation of the spoken utterance generated by the first additional client device includes determining an audio quality value indicating the quality of the audio data that captures the spoken utterance detected at the client device. In some implementations, the method further includes determining an additional audio quality value indicating the quality of the additional audio data capturing the spoken utterance detected at the first additional client device. In some implementations, the method further includes comparing the audio quality value and the additional audio quality value. In some implementations, the method further includes determining the text representation of the spoken utterance based on the comparing.

In some implementations, determining the text representation of the spoken utterance based on the candidate text representation of the spoken utterance and the first additional candidate text representation of the spoken utterance generated by the first additional client device includes determining an ASR quality value indicating the quality of the ASR model stored locally at the client device. In some implementations, the method further includes determining an additional ASR quality value indicating the quality of the additional ASR model stored locally at the additional client device. In some implementations, the method further includes comparing the ASR quality value and the additional ASR quality value. In some implementations, the method further includes determining the text representation of the spoken utterance based on the comparing.

In some implementations, the first additional candidate text representation of the spoken utterance includes a plurality of hypotheses, and wherein determining the text representation of the spoken utterance based on the candidate text representation of the spoken utterance and the first additional candidate text representation of the spoken utterance generated by the first additional client device includes reranking the plurality of hypotheses using the client device. In some implementations, the method further includes determining the text representation of the spoken utterance based on the candidate text representation of the spoken utterance and the reranked plurality of hypotheses.

In some implementations, prior to receiving, at the client device, from the first additional client device and via the local network, the first additional candidate text representation of the spoken utterance, and further including determining whether to generate the first additional candidate representation of the spoken utterance locally at the first additional client device based on (a) the audio data and/or (b) the locally detected audio data capturing the spoken utterance detected at the first additional client device, wherein determining whether to generate the first additional candidate representation of the spoken utterance locally at the first additional client device based on (a) the audio data and/or (b) the locally detected audio data capturing the spoken utterance detected at the first additional client device includes determining an audio quality value indicating the quality of the audio data that captures the spoken utterance detected at the client device. In some implementations, the method further includes determining an additional audio quality value indicating the quality of the locally detected audio data capturing the spoken utterance detected at the first additional client device. In some implementations, the method further includes comparing the audio quality value and the additional audio quality value. In some implementations, the method further includes determining whether to generate the first additional candidate representation of the spoken utterance locally at the first additional client device based on (a) the audio data and/or (b) the locally detected audio data capturing the spoken utterance detected at the first additional client device based on the comparing. In some versions of those implementations, determining the audio quality value indicating the quality of the audio data capturing the spoken utterance detected at the client device includes identifying one or more microphones of the client device. In some versions of those implementations, the method further includes determining the audio quality value based on the one or more microphones of the client device. In some versions of those implementations, determining the additional audio quality value indicating the quality of the locally detected audio data capturing the spoken utterance detected at the first additional client device includes identifying one or more first additional microphones of the first additional client device. In some versions of those implementations, the method further includes determining the additional audio quality value based on the one or more first additional microphones of the first additional client device. In some versions of those implementations, determining the audio quality value indicating the quality of the audio data capturing the spoken utterance detected at the client device includes generating a signal to noise ratio value based on processing the audio data capturing the spoken utterance. In some versions of those implementations, the method further includes determining the audio quality value based on the signal to noise ratio value. In some versions of those implementations, determining the additional audio quality value indicating the quality of the locally detected audio data capturing the spoken utterance detected at the first additional client device includes generating an additional signal to noise ratio value based on processing the audio data capturing the spoken utterance. In some versions of those implementations, the method further includes determining the additional audio quality value based on the additional signal to noise ratio value.

Prior to receiving, at the client device, from the first additional client device and via the local network, a first additional candidate text representation of the spoken utterance, the method further includes determining to transmit a request for the first additional candidate text representation of the spoken utterance to the first additional client device. In response to determining to transmit the request for the first additional candidate text representation of the spoken utterance to the first additional client device, the method further includes transmitting the request for the first additional candidate text representation of the spoken utterance to the first additional client device. In some versions of those implementations, determining whether to transmit the request for the first additional candidate text representation of the spoken utterance to the first additional client device includes determining a hotword confidence score based on processing at least a portion of the audio data that captures the spoken utterance of the user using a hotword model, wherein the hotword confidence score indicates a probability of whether at least the portion of the audio data includes a hotword. In some versions of those implementations, the method further includes determining whether the hotword confidence score satisfies one or more conditions, wherein determining whether the hotword confidence score satisfies the one or more conditions comprises determining whether the hotword confidence score satisfies a threshold value. In some versions of those implementations, in response to determining the hotword confidence score satisfies a threshold value, the method further includes determining whether the hotword confidence score indicates a weak probability that at least the portion of the audio data includes the hotword. In some versions of those implementations, in response to determining the hotword confidence score indicates the weak probability that the at least the portion of the audio data includes the hotword, the method further includes determining to transmit the request for the first additional candidate text representation of the spoken utterance to the first additional client device.

In addition, some implementations include one or more processors (e.g., central processing unit(s) (CPU(s)), graphics processing unit(s) (GPU(s), and/or tensor processing unit(s) (TPU(s)) of one or more computing devices, where the one or more processors are operable to execute instructions stored in associated memory, and where the instructions are configured to cause performance of any of the methods described herein. Some implementations also include one or more transitory or non-transitory computer readable storage media storing computer instructions executable by one or more processors to perform any of the methods described herein.

## Claims

1. A method implemented by one or more processors, the method comprising:
detecting, at a client device (202), audio data that captures a spoken utterance of a user, wherein the client device (202) is in an environment with one or more additional client devices (204, 206) and is in local communication with the one or more additional client devices (204, 206) via a local network, the one or more additional client devices including at least a first additional client device (204);
processing, at the client device (202), the audio data using an automatic speech recognition, ASR, model (312) stored locally at the client device to generate (220) a candidate text representation of the spoken utterance; the method being **characterised by** further comprising:
in response to determining to transmit a request for a first additional candidate text representation of the spoken utterance to the first additional client device (204), transmitting the request for the first additional candidate text representation of the spoken utterance to the first additional client device;
after transmitting the request, receiving, at the client device (202), from the first additional client device and via the local network, the first additional candidate text representation of the spoken utterance, the first additional candidate text representation of the spoken utterance generated (222) locally at the first additional client device is based on (a) the audio data and/or (b) locally detected audio data capturing the spoken utterance detected at the first additional client device, wherein the first additional candidate text representation of the spoken utterance is generated by processing the audio data and/or the locally generated audio data using a first additional ASR model (322) stored locally at the first additional client device; and
determining, at the client device (202), a text representation of the spoken utterance based on the candidate text representation of the spoken utterance and the first additional candidate text representation of the spoken utterance generated by the first additional client device.

2. The method of claim 1,
wherein the one or more additional client devices includes at least the first additional client device and a second additional client device;
wherein receiving, at the client device, from the first additional client device and via the local network, the first additional candidate text representation further comprises:
receiving, at the client device, from the second additional client device and via the local network, a second additional candidate text representation of the spoken utterance generated locally at the second additional client device is based on (a) the audio data and/or (b) additional locally detected audio data capturing the spoken utterance detected at the second additional client device, wherein the second additional candidate text representation of the spoken utterance is generated by processing the audio data and/or the additional locally generated audio data using a second additional ASR model stored locally at the second additional client device; and
wherein determining the text representation of the spoken utterance based on the candidate text representation of the spoken utterance and the first additional candidate text representation of the spoken utterance generated by the first additional client device further comprises:
determining the text representation of the spoken utterance based on the candidate text representation of the spoken utterance, the first additional candidate text representation of the spoken utterance generated by the first additional client device, and the second additional candidate text representation of the spoken utterance generated by the second additional client device.

3. The method of claim 1, wherein determining the text representation of the spoken utterance based on the candidate text representation of the spoken utterance and the first additional candidate text representation of the spoken utterance generated by the first additional client device comprises:
randomly selecting either the candidate text representation of the spoken utterance or the first additional candidate text representation of the spoken utterance; and
determining the text representation of the spoken utterance based on the random selection.

4. The method of claim 1, wherein determining the text representation of the spoken utterance based on the candidate text representation of the spoken utterance and the first additional candidate text representation of the spoken utterance generated by the first additional client device comprises:
determining a confidence score of the candidate text representation indicating a probability that the candidate text representation is the text representation, where the confidence score is based on one or more device parameters of the client device;
determining an additional confidence score of the additional candidate text representation indicating an additional probability that the additional candidate text representation is the text representation, where the additional confidence score is based on one or more additional device parameters of the additional client device;
comparing the confidence score and the additional confidence score; and
determining the text representation of the spoken utterance based on the comparing.

5. The method of claim 1 or claim 4, wherein determining the text representation of the spoken utterance based on the candidate text representation of the spoken utterance and the first additional candidate text representation of the spoken utterance generated by the first additional client device comprises:
determining an audio quality value indicating the quality of the audio data that captures the spoken utterance detected at the client device;
determining an additional audio quality value indicating the quality of the additional audio data capturing the spoken utterance detected at the first additional client device;
comparing the audio quality value and the additional audio quality value; and
determining the text representation of the spoken utterance based on the comparing.

6. The method of claim 1, claim 4, or claim 5, wherein determining the text representation of the spoken utterance based on the candidate text representation of the spoken utterance and the first additional candidate text representation of the spoken utterance generated by the first additional client device comprises:
determining an ASR quality value indicating the quality of the ASR model stored locally at the client device;
determining an additional ASR quality value indicating the quality of the additional ASR model stored locally at the additional client device;
comparing the ASR quality value and the additional ASR quality value; and
determining the text representation of the spoken utterance based on the comparing.

7. The method of any preceding claim, wherein the first additional candidate text representation of the spoken utterance includes a plurality of hypotheses, and wherein determining the text representation of the spoken utterance based on the candidate text representation of the spoken utterance and the first additional candidate text representation of the spoken utterance generated by the first additional client device comprises:
reranking the plurality of hypotheses using the client device; and
determining the text representation of the spoken utterance based on the candidate text representation of the spoken utterance and the reranked plurality of hypotheses.

8. The method of any preceding claim, further comprising, prior to receiving, at the client device, from the first additional client device and via the local network, the first additional candidate text representation of the spoken utterance:
determining to generate the first additional candidate representation of the spoken utterance locally at the first additional client device based on (a) the audio data and/or (b) the locally detected audio data capturing the spoken utterance detected at the first additional client device, wherein determining to generate the first additional candidate representation of the spoken utterance locally at the first additional client device based on (a) the audio data and/or (b) the locally detected audio data capturing the spoken utterance detected at the first additional client device comprises:
determining an audio quality value indicating the quality of the audio data that captures the spoken utterance detected at the client device;
determining an additional audio quality value indicating the quality of the locally detected audio data capturing the spoken utterance detected at the first additional client device;
comparing the audio quality value and the additional audio quality value; and
determining to generate the first additional candidate representation of the spoken utterance locally at the first additional client device based on (a) the audio data and/or (b) the locally detected audio data capturing the spoken utterance detected at the first additional client device based on the comparing.

9. The method of claim 8, wherein determining the audio quality value indicating the quality of the audio data capturing the spoken utterance detected at the client device comprises:
identifying one or more microphones of the client device; and
determining the audio quality value based on the one or more microphones of the client device; and
wherein determining the additional audio quality value indicating the quality of the locally detected audio data capturing the spoken utterance detected at the first additional client device comprises:
identifying one or more first additional microphones of the first additional client device; and
determining the additional audio quality value based on the one or more first additional microphones of the first additional client device.

10. The method of claim 8 or claim 9, wherein determining the audio quality value indicating the quality of the audio data capturing the spoken utterance detected at the client device comprises:
generating a signal to noise ratio value based on processing the audio data capturing the spoken utterance; and
determining the audio quality value based on the signal to noise ratio value; and
wherein determining the additional audio quality value indicating the quality of the locally detected audio data capturing the spoken utterance detected at the first additional client device comprises:
generating an additional signal to noise ratio value based on processing the audio data capturing the spoken utterance; and
determining the additional audio quality value based on the additional signal to noise ratio value.

11. The method of claim any preceding claim, wherein determining to transmit the request for the first additional candidate text representation of the spoken utterance to the first additional client device comprises:
determining a hotword confidence score based on processing at least a portion of the audio data that captures the spoken utterance of the user using a hotword model, wherein the hotword confidence score indicates a probability of whether at least the portion of the audio data includes a hotword;
determining whether the hotword confidence score satisfies one or more conditions, wherein determining whether the hotword confidence score satisfies the one or more conditions comprises determining whether the hotword confidence score satisfies a threshold value;
in response to determining the hotword confidence score satisfies a threshold value, determining whether the hotword confidence score indicates a weak probability that at least the portion of the audio data includes the hotword; and
in response to determining the hotword confidence score indicates the weak probability that the at least the portion of the audio data includes the hotword, determining to transmit the request for the first additional candidate text representation of the spoken utterance to the first additional client device.

12. A system, comprising:
one or more processors (914); and
memory (925) configured to store instructions that, when executed by one or more processors, cause the one or more processors to perform operations that include:
detecting, at a client device (202), audio data that captures a spoken utterance of a user, wherein the client device (202) is in an environment with one or more additional client devices (204, 206) and is in local communication with the one or more additional client devices (204, 206) via a local network, the one or more additional client devices including at least a first additional client device (204);
processing, at the client device, the audio data using an automatic speech recognition, ASR, model (312) stored locally at the client device to generate (220) a candidate text representation of the spoken utterance;
in response to determining to transmit a request for a first additional candidate text representation of the spoken utterance to the first additional client device (204), transmitting the request for the first additional candidate text representation of the spoken utterance to the first additional client device;
after transmitting the request receiving, at the client device (202), from the first additional client device and via the local network, the first additional candidate text representation of the spoken utterance, the first additional candidate text representation of the spoken utterance generated (222) locally at the first additional client device is based on (a) the audio data and/or (b) locally detected audio data capturing the spoken utterance detected at the first additional client device, wherein the first additional candidate text representation of the spoken utterance is generated by processing the audio data and/or the locally generated audio data using a first additional ASR model (322) stored locally at the first additional client device; and
determining, at the client device (202), a text representation of the spoken utterance based on the candidate text representation of the spoken utterance and the first additional candidate text representation of the spoken utterance generated by the first additional client device.

13. The system of claim 12,
wherein the one or more additional client devices includes at least the first additional client device and a second additional client device;
wherein receiving, at the client device, from the first additional client device and via the local network, the first additional candidate text representation further comprises:
receiving, at the client device, from the second additional client device and via the local network, a second additional candidate text representation of the spoken utterance generated locally at the second additional client device is based on (a) the audio data and/or (b) additional locally detected audio data capturing the spoken utterance detected at the second additional client device, wherein the second additional candidate text representation of the spoken utterance is generated by processing the audio data and/or the additional locally generated audio data using a second additional ASR model stored locally at the second additional client device; and
wherein determining the text representation of the spoken utterance based on the candidate text representation of the spoken utterance and the first additional candidate text representation of the spoken utterance generated by the first additional client device further comprises:
determining the text representation of the spoken utterance based on the candidate text representation of the spoken utterance, the first additional candidate text representation of the spoken utterance generated by the first additional client device, and the second additional candidate text representation of the spoken utterance generated by the second additional client device.

14. The system of claim 12 or claim 13, wherein the first additional candidate text representation of the spoken utterance includes a plurality of hypotheses, and wherein determining the text representation of the spoken utterance based on the candidate text representation of the spoken utterance and the first additional candidate text representation of the spoken utterance generated by the first additional client device comprises:
reranking the plurality of hypotheses using the client device; and
determining the text representation of the spoken utterance based on the candidate text representation of the spoken utterance and the reranked plurality of hypotheses.

15. A computer program comprising instructions, which, when executed by one or more processors (914), cause the one or more processors to carry out the method of any one of claims 1 to 11.

## Patentansprüche

1. Verfahren, das durch einen oder mehrere Prozessoren implementiert wird, wobei das Verfahren Folgendes umfasst:
Detektieren von Audiodaten, die eine gesprochene Äußerung eines Benutzers erfassen, an einem Client-Gerät (202), wobei sich das Client-Gerät (202) in einer Umgebung mit einem oder mehreren zusätzlichen Client-Geräten (204, 206) befindet und über ein lokales Netzwerk in lokaler Kommunikation mit dem einen oder den mehreren zusätzlichen Client-Geräten (204, 206) steht, wobei das eine oder die mehreren zusätzlichen Client-Geräte mindestens ein erstes zusätzliches Client-Gerät (204) einschließen;
Verarbeiten der Audiodaten an dem Client-Gerät (202) unter Verwendung eines Modells zur automatischen Spracherkennung, ASR-Modells, (312), das lokal an dem Client-Gerät gespeichert ist, um eine Kandidatentextdarstellung der gesprochenen Äußerung zu generieren (220); wobei das Verfahren **dadurch gekennzeichnet ist, dass** es ferner Folgendes umfasst:
als Reaktion auf ein Bestimmen, eine Anforderung für eine erste zusätzliche Kandidatentextdarstellung der gesprochenen Äußerung an das erste zusätzliche Client-Gerät (204) zu übertragen, Übertragen der Anforderung für die erste zusätzliche Kandidatentextdarstellung der gesprochenen Äußerung an das erste zusätzliche Client-Gerät;
nach dem Übertragen der Anforderung, Empfangen der ersten zusätzlichen Kandidatentextdarstellung der gesprochenen Äußerung an dem Client-Gerät (202) von dem ersten zusätzlichen Client-Gerät und über das lokale Netzwerk, wobei die erste zusätzliche Kandidatentextdarstellung der gesprochenen Äußerung, die lokal an dem ersten zusätzlichen Client-Gerät generiert (222) wird, auf (a) den Audiodaten und/oder (b) lokal detektierten Audiodaten, die die an dem ersten zusätzlichen Client-Gerät detektierte gesprochene Äußerung erfassen, basiert, wobei die erste zusätzliche Kandidatentextdarstellung der gesprochenen Äußerung durch Verarbeiten der Audiodaten und/oder der lokal generierten Audiodaten unter Verwendung eines ersten zusätzlichen ASR-Modells (322) generiert wird, das lokal an dem ersten zusätzlichen Client-Gerät gespeichert ist; und
Bestimmen einer Textdarstellung der gesprochenen Äußerung an dem Client-Gerät (202) basierend auf der Kandidatentextdarstellung der gesprochenen Äußerung und der durch das erste zusätzliche Client-Gerät generierten ersten zusätzlichen Kandidatentextdarstellung der gesprochenen Äußerung.

2. Verfahren nach Anspruch 1,
wobei das eine oder die mehreren zusätzlichen Client-Geräte mindestens das erste zusätzliche Client-Gerät und ein zweites zusätzliches Client-Gerät einschließen;
wobei das Empfangen der ersten zusätzlichen Kandidatentextdarstellung an dem Client-Gerät von dem ersten zusätzlichen Client-Gerät und über das lokale Netzwerk ferner Folgendes umfasst:
Empfangen einer zweiten zusätzlichen Kandidatentextdarstellung der gesprochenen Äußerung an dem Client-Gerät von dem zweiten zusätzlichen Client-Gerät und über das lokale Netzwerk, die lokal an dem zweiten zusätzlichen Client-Gerät generiert wird, basiert auf (a) den Audiodaten und/oder (b) zusätzlichen lokal detektierten Audiodaten, die die an dem zweiten zusätzlichen Client-Gerät detektierte gesprochene Äußerung erfassen, wobei die zweite zusätzliche Kandidatentextdarstellung der gesprochenen Äußerung durch Verarbeiten der Audiodaten und/oder der zusätzlichen lokal generierten Audiodaten unter Verwendung eines zweiten zusätzlichen ASR-Modells generiert wird, das lokal an dem zweiten zusätzlichen Client-Gerät gespeichert ist; und
wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung ferner Folgendes umfasst:
Bestimmen der Textdarstellung der gesprochenen Äußerung basierend auf der Kandidatentextdarstellung der gesprochenen Äußerung, der durch das erste zusätzliche Client-Gerät generierten ersten zusätzlichen Kandidatentextdarstellung der gesprochenen Äußerung und der durch das zweite zusätzliche Client-Gerät generierten zweiten zusätzlichen Kandidatentextdarstellung der gesprochenen Äußerung.

3. Verfahren nach Anspruch 1, wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
zufälliges Auswählen entweder der Kandidatentextdarstellung der gesprochenen Äußerung oder der ersten zusätzlichen Kandidatentextdarstellung der gesprochenen Äußerung; und
Bestimmen der Textdarstellung der gesprochenen Äußerung basierend auf der zufälligen Auswahl.

4. Verfahren nach Anspruch 1, wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
Bestimmen einer Konfidenzbewertung der Kandidatentextdarstellung, die eine Wahrscheinlichkeit angibt, dass die Kandidatentextdarstellung die Textdarstellung ist, wobei die Konfidenzbewertung auf einem oder mehreren Geräteparametern des Client-Geräts basiert;
Bestimmen einer zusätzlichen Konfidenzbewertung der zusätzlichen Kandidatentextdarstellung, die eine zusätzliche Wahrscheinlichkeit angibt, dass die zusätzliche Kandidatentextdarstellung die Textdarstellung ist, wobei die zusätzliche Konfidenzbewertung auf einem oder mehreren zusätzlichen Geräteparametern des zusätzlichen Client-Geräts basiert;
Vergleichen der Konfidenzbewertung und der zusätzlichen Konfidenzbewertung; und
Bestimmen der Textdarstellung der gesprochenen Äußerung basierend auf dem Vergleichen.

5. Verfahren nach Anspruch 1 oder Anspruch 4, wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
Bestimmen eines Audioqualitätswerts, der die Qualität der Audiodaten angibt, die die an dem Client-Gerät detektierte gesprochene Äußerung erfassen;
Bestimmen eines zusätzlichen Audioqualitätswerts, der die Qualität der zusätzlichen Audiodaten angibt, die die an dem ersten zusätzlichen Client-Gerät detektierte gesprochene Äußerung erfassen;
Vergleichen des Audioqualitätswerts und des zusätzlichen Audioqualitätswerts; und
Bestimmen der Textdarstellung der gesprochenen Äußerung basierend auf dem Vergleichen.

6. Verfahren nach Anspruch 1, Anspruch 4 oder Anspruch 5, wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
Bestimmen eines ASR-Qualitätswerts, der die Qualität des ASR-Modells angibt, das lokal an dem Client-Gerät gespeichert ist;
Bestimmen eines zusätzlichen ASR-Qualitätswerts, der die Qualität des zusätzlichen ASR-Modells angibt, das lokal an dem zusätzlichen Client-Gerät gespeichert ist;
Vergleichen des ASR-Qualitätswerts und des zusätzlichen ASR-Qualitätswerts; und
Bestimmen der Textdarstellung der gesprochenen Äußerung basierend auf dem Vergleichen.

7. Verfahren nach einem vorhergehenden Anspruch, wobei die erste zusätzliche Kandidatentextdarstellung der gesprochenen Äußerung eine Vielzahl von Hypothesen einschließt und wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
Neueinstufen der Vielzahl von Hypothesen unter Verwendung des Client-Geräts; und
Bestimmen der Textdarstellung der gesprochenen Äußerung basierend auf der Kandidatentextdarstellung der gesprochenen Äußerung und der neueingestuften Vielzahl von Hypothesen.

8. Verfahren nach einem vorhergehenden Anspruch, ferner umfassend Folgendes vor dem Empfangen der ersten zusätzlichen Kandidatentextdarstellung der gesprochenen Äußerung an dem Client-Gerät von dem ersten zusätzlichen Client-Gerät und über das lokale Netzwerk:
Bestimmen, die erste zusätzliche Kandidatendarstellung der gesprochenen Äußerung lokal an dem ersten zusätzlichen Client-Gerät basierend auf (a) den Audiodaten und/oder (b) den lokal detektierten Audiodaten, die die an dem ersten zusätzlichen Client-Gerät detektierte gesprochene Äußerung erfassen, zu generieren, wobei das Bestimmen, die erste zusätzliche Kandidatendarstellung der gesprochenen Äußerung lokal an dem ersten zusätzlichen Client-Gerät basierend auf (a) den Audiodaten und/oder (b) den lokal detektierten Audiodaten, die die an dem ersten zusätzlichen Client-Gerät detektierte gesprochene Äußerung erfassen, zu generieren, Folgendes umfasst:
Bestimmen eines Audioqualitätswerts, der die Qualität der Audiodaten angibt, die die an dem Client-Gerät detektierte gesprochene Äußerung erfassen;
Bestimmen eines zusätzlichen Audioqualitätswerts, der die Qualität der lokal detektierten Audiodaten angibt, die die an dem ersten zusätzlichen Client-Gerät detektierte gesprochene Äußerung erfassen;
Vergleichen des Audioqualitätswerts und des zusätzlichen Audioqualitätswerts; und
Bestimmen, die erste zusätzliche Kandidatendarstellung der gesprochenen Äußerung lokal an dem ersten zusätzlichen Client-Gerät basierend auf (a) den Audiodaten und/oder (b) den lokal detektierten Audiodaten, die die an dem ersten zusätzlichen Client-Gerät detektierte gesprochene Äußerung erfassen, zu generieren, basierend auf dem Vergleichen.

9. Verfahren nach Anspruch 8, wobei das Bestimmen des Audioqualitätswerts, der die Qualität der Audiodaten angibt, die die an dem Client-Gerät detektierte gesprochene Äußerung erfassen, Folgendes umfasst:
Identifizieren eines oder mehrerer Mikrofone des Client-Geräts; und
Bestimmen des Audioqualitätswerts basierend auf dem einen oder den mehreren Mikrofonen des Client-Geräts; und
wobei das Bestimmen des zusätzlichen Audioqualitätswerts, der die Qualität der lokal detektierten Audiodaten angibt, die die an dem ersten zusätzlichen Client-Gerät detektierte gesprochene Äußerung erfassen, Folgendes umfasst:
Identifizieren eines oder mehrerer erster zusätzlicher Mikrofone des ersten zusätzlichen Client-Geräts; und
Bestimmen des zusätzlichen Audioqualitätswerts basierend auf dem einen oder den mehreren ersten zusätzlichen Mikrofonen des ersten zusätzlichen Client-Geräts.

10. Verfahren nach Anspruch 8 oder Anspruch 9, wobei das Bestimmen des Audioqualitätswerts, der die Qualität der Audiodaten angibt, die die an dem Client-Gerät detektierte gesprochene Äußerung erfassen, Folgendes umfasst:
Generieren eines Signal-Rausch-Verhältnis-Werts basierend auf dem Verarbeiten der Audiodaten, die die gesprochene Äußerung erfassen; und
Bestimmen des Audioqualitätswerts basierend auf dem Signal-Rausch-Verhältnis-Wert; und
wobei das Bestimmen des zusätzlichen Audioqualitätswerts, der die Qualität der lokal detektierten Audiodaten angibt, die die an dem ersten zusätzlichen Client-Gerät detektierte gesprochene Äußerung erfassen, Folgendes umfasst:
Generieren eines zusätzlichen Signal-Rausch-Verhältnis-Werts basierend auf dem Verarbeiten der Audiodaten, die die gesprochene Äußerung erfassen; und
Bestimmen des zusätzlichen Audioqualitätswerts basierend auf dem zusätzlichen Signal-Rausch-Verhältnis-Wert.

11. Verfahren nach Anspruch einem vorhergehenden Anspruch, wobei das Bestimmen, die Anforderung für die erste zusätzliche Kandidatentextdarstellung der gesprochenen Äußerung an das erste zusätzliche Client-Gerät zu übertragen, Folgendes umfasst:
Bestimmen einer Hotword-Konfidenzbewertung basierend auf dem Verarbeiten mindestens eines Teils der Audiodaten, die die gesprochene Äußerung des Benutzers erfassen, unter Verwendung eines Hotword-Modells, wobei die Hotword-Konfidenzbewertung eine Wahrscheinlichkeit angibt, ob mindestens der Teil der Audiodaten ein Hotword einschließt;
Bestimmen, ob die Hotword-Konfidenzbewertung eine oder mehrere Bedingungen erfüllt, wobei das Bestimmen, ob die Hotword-Konfidenzbewertung eine oder mehrere Bedingungen erfüllt, Bestimmen umfasst, ob die Hotword-Konfidenzbewertung einen Schwellenwert erfüllt;
als Reaktion auf das Bestimmen, dass die Hotword-Konfidenzbewertung einen Schwellenwert erfüllt, Bestimmen, ob die Hotword-Konfidenzbewertung eine schwache Wahrscheinlichkeit angibt, dass mindestens der Teil der Audiodaten das Hotword einschließt; und
als Reaktion auf das Bestimmen, dass die Hotword-Konfidenzbewertung die schwache Wahrscheinlichkeit angibt, dass mindestens der Teil der Audiodaten das Hotword einschließt, Bestimmen, die Anforderung für die erste zusätzliche Kandidatentextdarstellung der gesprochenen Äußerung an das erste zusätzliche Client-Gerät zu übertragen.

12. System, umfassend:
einen oder mehrere Prozessoren (914); und
Speicher (925), der dazu konfiguriert ist, Anweisungen zu speichern, die, wenn sie durch einen oder mehrere Prozessoren ausgeführt werden, den einen oder die mehreren Prozessoren dazu veranlassen, Vorgänge vorzunehmen, die Folgendes einschließen:
Detektieren von Audiodaten, die eine gesprochene Äußerung eines Benutzers erfassen, an einem Client-Gerät (202), wobei sich das Client-Gerät (202) in einer Umgebung mit einem oder mehreren zusätzlichen Client-Geräten (204, 206) befindet und über ein lokales Netzwerk in lokaler Kommunikation mit dem einen oder den mehreren zusätzlichen Client-Geräten (204, 206) steht, wobei das eine oder die mehreren zusätzlichen Client-Geräte mindestens ein erstes zusätzliches Client-Gerät (204) einschließen;
Verarbeiten der Audiodaten an dem Client-Gerät unter Verwendung eines Modells zur automatischen Spracherkennung, ASR-Modells, (312), das lokal an dem Client-Gerät gespeichert ist, um eine Kandidatentextdarstellung der gesprochenen Äußerung zu generieren (220);
als Reaktion auf ein Bestimmen, eine Anforderung für eine erste zusätzliche Kandidatentextdarstellung der gesprochenen Äußerung an das erste zusätzliche Client-Gerät (204) zu übertragen, Übertragen der Anforderung für die erste zusätzliche Kandidatentextdarstellung der gesprochenen Äußerung an das erste zusätzliche Client-Gerät;
nach dem Übertragen der Anforderung Empfangen der ersten zusätzlichen Kandidatentextdarstellung der gesprochenen Äußerung an dem Client-Gerät (202) von dem ersten zusätzlichen Client-Gerät und über das lokale Netzwerk, wobei die erste zusätzliche Kandidatentextdarstellung der gesprochenen Äußerung, die lokal an dem ersten zusätzlichen Client-Gerät generiert (222) wird, auf (a) den Audiodaten und/oder (b) lokal detektierten Audiodaten, die die an dem ersten zusätzlichen Client-Gerät detektierte gesprochene Äußerung erfassen, basiert, wobei die erste zusätzliche Kandidatentextdarstellung der gesprochenen Äußerung durch Verarbeiten der Audiodaten und/oder der lokal generierten Audiodaten unter Verwendung eines ersten zusätzlichen ASR-Modells (322) generiert wird, das lokal an dem ersten zusätzlichen Client-Gerät gespeichert ist; und
Bestimmen einer Textdarstellung der gesprochenen Äußerung an dem Client-Gerät (202) basierend auf der Kandidatentextdarstellung der gesprochenen Äußerung und der durch das erste zusätzliche Client-Gerät generierten ersten zusätzlichen Kandidatentextdarstellung der gesprochenen Äußerung.

13. System nach Anspruch 12,
wobei das eine oder die mehreren zusätzlichen Client-Geräte mindestens das erste zusätzliche Client-Gerät und ein zweites zusätzliches Client-Gerät einschließen;
wobei das Empfangen der ersten zusätzlichen Kandidatentextdarstellung an dem Client-Gerät von dem ersten zusätzlichen Client-Gerät und über das lokale Netzwerk ferner Folgendes umfasst:
Empfangen einer zweiten zusätzlichen Kandidatentextdarstellung der gesprochenen Äußerung an dem Client-Gerät von dem zweiten zusätzlichen Client-Gerät und über das lokale Netzwerk, die lokal an dem zweiten zusätzlichen Client-Gerät generiert wird, basiert auf (a) den Audiodaten und/oder (b) zusätzlichen lokal detektierten Audiodaten, die die an dem zweiten zusätzlichen Client-Gerät detektierte gesprochene Äußerung erfassen, wobei die zweite zusätzliche Kandidatentextdarstellung der gesprochenen Äußerung durch Verarbeiten der Audiodaten und/oder der zusätzlichen lokal generierten Audiodaten unter Verwendung eines zweiten zusätzlichen ASR-Modells generiert wird, das lokal an dem zweiten zusätzlichen Client-Gerät gespeichert ist; und
wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung ferner Folgendes umfasst:
Bestimmen der Textdarstellung der gesprochenen Äußerung basierend auf der Kandidatentextdarstellung der gesprochenen Äußerung, der durch das erste zusätzliche Client-Gerät generierten ersten zusätzlichen Kandidatentextdarstellung der gesprochenen Äußerung und der durch das zweite zusätzliche Client-Gerät generierten zweiten zusätzlichen Kandidatentextdarstellung der gesprochenen Äußerung.

14. System nach Anspruch 12 oder Anspruch 13, wobei die erste zusätzliche Kandidatentextdarstellung der gesprochenen Äußerung eine Vielzahl von Hypothesen einschließt und wobei das Bestimmen der Textdarstellung der gesprochenen Äußerung basierend auf der Kandidatentextdarstellung der gesprochenen Äußerung und der durch das erste zusätzliche Client-Gerät generierten ersten zusätzlichen Kandidatentextdarstellung der gesprochenen Äußerung Folgendes umfasst:
Neueinstufen der Vielzahl von Hypothesen unter Verwendung des Client-Geräts; und
Bestimmen der Textdarstellung der gesprochenen Äußerung basierend auf der Kandidatentextdarstellung der gesprochenen Äußerung und der neueingestuften Vielzahl von Hypothesen.

15. Computerprogramm, das Anweisungen umfasst, die, wenn sie durch einen oder mehrere Prozessoren (914) ausgeführt werden, den einen oder die mehreren Prozessoren dazu veranlassen, das Verfahren nach einem der Ansprüche 1 bis 11 durchzuführen.

## Revendications

1. Procédé mis en œuvre par un ou plusieurs processeurs, le procédé comprenant :
la détection, au niveau d'un dispositif client (202), de données audio qui capturent un énoncé parlé d'un utilisateur, ledit dispositif client (202) étant dans un environnement avec un ou plusieurs dispositifs clients supplémentaires (204, 206) et étant en communication locale avec le ou les dispositifs clients supplémentaires (204, 206) par l'intermédiaire d'un réseau local, le ou les dispositifs clients supplémentaires comprenant au moins un premier dispositif client supplémentaire (204) ;
le traitement, au niveau du dispositif client (202), des données audio à l'aide d'un modèle (312) de reconnaissance automatique de la parole, ASR, stocké localement au niveau du dispositif client pour générer (220) une représentation textuelle candidate de l'énoncé parlé ; le procédé étant caractérisé en comprenant en outre :
en réponse à la détermination de transmettre une demande de première représentation textuelle candidate supplémentaire de l'énoncé parlé au premier dispositif client supplémentaire (204), la transmission de la demande de première représentation textuelle candidate supplémentaire de l'énoncé parlé au premier dispositif client supplémentaire ;
après la transmission de la demande, la réception, au niveau du dispositif client (202), en provenance du premier dispositif client supplémentaire et par l'intermédiaire du réseau local, de la première représentation textuelle candidate supplémentaire de l'énoncé parlé, la première représentation textuelle candidate supplémentaire de l'énoncé parlé générée (222) localement au niveau du premier dispositif client supplémentaire est basée sur (a) les données audio et/ou (b) les données audio détectées localement capturant l'énoncé parlé détecté au niveau du premier dispositif client supplémentaire, ladite première représentation textuelle candidate supplémentaire de l'énoncé parlé étant générée en traitant les données audio et/ou les données audio générées localement à l'aide d'un premier modèle ASR supplémentaire (322) stocké localement au niveau du premier dispositif client supplémentaire ; et
la détermination, au niveau du dispositif client (202), d'une représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire.

2. Procédé de la revendication 1,
ledit ou lesdits dispositifs clients supplémentaires comprenant au moins le premier dispositif client supplémentaire et un second dispositif client supplémentaire ;
ladite réception, au niveau du dispositif client, en provenance du premier dispositif client supplémentaire et par l'intermédiaire du réseau local, de la première représentation textuelle candidate supplémentaire comprenant en outre :
la réception, au niveau du dispositif client, en provenance du second dispositif client supplémentaire et par l'intermédiaire du réseau local, d'une seconde représentation textuelle candidate supplémentaire de l'énoncé parlé générée localement au niveau du second dispositif client supplémentaire qui est basée sur (a) les données audio et/ou (b) les données audio détectées localement supplémentaires capturant l'énoncé parlé détecté au niveau du second dispositif client supplémentaire, ladite seconde représentation textuelle candidate supplémentaire de l'énoncé parlé étant générée en traitant les données audio et/ou les données audio générées localement supplémentaires à l'aide d'un second modèle ASR supplémentaire stocké localement au niveau du second dispositif client supplémentaire ; et
ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant en outre :
la détermination de la représentation textuelle de l'énoncé parlé sur la base de la représentation textuelle candidate de l'énoncé parlé, de la première représentation textuelle candidate supplémentaire de l'énoncé parlé générée par le premier dispositif client supplémentaire, et de la seconde représentation textuelle candidate supplémentaire de l'énoncé parlé générée par le second dispositif client supplémentaire.

3. Procédé de la revendication 1, ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
la sélection aléatoire de la représentation textuelle candidate de l'énoncé parlé ou de la première représentation textuelle candidate supplémentaire de l'énoncé parlé ; et
la détermination de la représentation textuelle de l'énoncé parlé sur la base de la sélection aléatoire.

4. Procédé de la revendication 1, ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
la détermination d'un score de confiance de la représentation textuelle candidate indiquant une probabilité que la représentation textuelle candidate soit la représentation textuelle,où le score de confiance est basé sur un ou plusieurs paramètres de dispositif du dispositif client ;
la détermination d'un score de confiance supplémentaire de la représentation textuelle candidate supplémentaire indiquant une probabilité supplémentaire que la représentation textuelle candidate supplémentaire soit la représentation textuelle, où le score de confiance supplémentaire est basé sur un ou plusieurs paramètres de dispositif supplémentaires du dispositif client supplémentaire ;
la comparaison du score de confiance et du score de confiance supplémentaire ; et
la détermination de la représentation textuelle de l'énoncé parlé sur la base de la comparaison.

5. Procédé de la revendication 1 ou de la revendication 4, ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
la détermination d'une valeur de qualité audio indiquant la qualité des données audio qui capturent l'énoncé parlé détecté au niveau du dispositif client ;
la détermination d'une valeur de qualité audio supplémentaire indiquant la qualité des données audio supplémentaires capturant l'énoncé parlé détecté au niveau du premier dispositif client supplémentaire ;
la comparaison de la valeur de qualité audio et de la valeur de qualité audio supplémentaire ; et
la détermination de la représentation textuelle de l'énoncé parlé sur la base de la comparaison.

6. Procédé de la revendication 1, de la revendication 4 ou de la revendication 5, ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
la détermination d'une valeur de qualité ASR indiquant la qualité du modèle ASR stocké localement au niveau du dispositif client ;
la détermination d'une valeur de qualité ASR supplémentaire indiquant la qualité du modèle ASR supplémentaire stocké localement au niveau du dispositif client supplémentaire ;
la comparaison de la valeur de qualité ASR et de la valeur de qualité ASR supplémentaire ; et
la détermination de la représentation textuelle de l'énoncé parlé sur la base de la comparaison.

7. Procédé d'une quelconque revendication précédente, ladite première représentation textuelle candidate supplémentaire de l'énoncé parlé comprenant une pluralité d'hypothèses, et ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
le reclassement de la pluralité d'hypothèses à l'aide du dispositif client ; et
la détermination de la représentation textuelle de l'énoncé parlé sur la base de la représentation textuelle candidate de l'énoncé parlé et de la pluralité d'hypothèses reclassées.

8. Procédé d'une quelconque revendication précédente, comprenant en outre, avant la réception, au niveau du dispositif client, en provenance du premier dispositif client supplémentaire et par l'intermédiaire du réseau local, de la première représentation textuelle candidate supplémentaire de l'énoncé parlé :
la détermination de générer localement au niveau du premier dispositif client supplémentaire la première représentation candidate supplémentaire de l'énoncé parlé sur la base (a) des données audio et/ou (b) des données audio détectées localement capturant l'énoncé parlé détecté au niveau du premier dispositif client supplémentaire, ladite détermination de générer localement au niveau du premier dispositif client supplémentaire la première représentation candidate supplémentaire de l'énoncé parlé sur la base (a) des données audio et/ou (b) des données audio détectées localement capturant l'énoncé parlé détecté au niveau du premier dispositif client supplémentaire comprenant :
la détermination d'une valeur de qualité audio indiquant la qualité des données audio qui capturent l'énoncé parlé détecté au niveau du dispositif client ;
la détermination d'une valeur de qualité audio supplémentaire indiquant la qualité des données audio détectées localement capturant l'énoncé parlé détecté au niveau du premier dispositif client supplémentaire ;
la comparaison de la valeur de qualité audio et de la valeur de qualité audio supplémentaire ; et
la détermination de générer localement au niveau du premier dispositif client supplémentaire la première représentation candidate supplémentaire de l'énoncé parlé sur la base (a) des données audio et/ou (b) des données audio détectées localement capturant l'énoncé parlé détecté au niveau du premier dispositif client supplémentaire sur la base de la comparaison.

9. Procédé de la revendication 8, ladite détermination de la valeur de qualité audio indiquant la qualité des données audio capturant l'énoncé parlé détecté au niveau du dispositif client comprenant :
l'identification d'un ou plusieurs microphones du dispositif client ; et
la détermination de la valeur de qualité audio sur la base du ou des microphones du dispositif client ; et
ladite détermination d'une valeur de qualité audio supplémentaire indiquant la qualité des données audio détectées localement capturant l'énoncé parlé détecté au niveau du premier dispositif client supplémentaire comprenant :
l'identification d'un ou plusieurs premiers microphones supplémentaires du premier dispositif client supplémentaire ; et
la détermination de la valeur de qualité audio supplémentaire sur la base du ou des premiers microphones supplémentaires du premier dispositif client supplémentaire.

10. Procédé de la revendication 8 ou de la revendication 9, ladite détermination de la valeur de qualité audio indiquant la qualité des données audio capturant l'énoncé parlé détecté au niveau du dispositif client comprenant :
la génération d'une valeur de rapport signal sur bruit sur la base du traitement des données audio capturant l'énoncé parlé ; et
la détermination de la valeur de qualité audio sur la base de la valeur de rapport signal sur bruit ; et
ladite détermination de la valeur de qualité audio supplémentaire indiquant la qualité des données audio détectées localement capturant l'énoncé parlé détecté au niveau du premier dispositif client supplémentaire comprenant :
la génération d'une valeur de rapport signal sur bruit supplémentaire sur la base du traitement des données audio capturant l'énoncé parlé ; et
la détermination de la valeur de qualité audio supplémentaire sur la base de la valeur de rapport signal sur bruit supplémentaire.

11. Procédé de revendication d'une quelconque revendication précédente, ladite détermination de transmettre la demande de la première représentation textuelle candidate supplémentaire de l'énoncé parlé au premier dispositif client supplémentaire comprenant :
la détermination d'un score de confiance de mot d'activation sur la base du traitement d'au moins une partie des données audio qui capturent l'énoncé parlé de l'utilisateur à l'aide d'un modèle de mot d'activation, ledit score de confiance de mot d'activation indiquant une probabilité qu'au moins la partie des données audio comprenne ou non un mot d'activation ;
la détermination pour savoir si le score de confiance de mot d'activation satisfait une ou plusieurs conditions, ladite détermination pour savoir si le score de confiance de mot d'activation satisfait la ou les conditions comprenant la détermination pour savoir si le score de confiance de mot d'activation satisfait une valeur seuil ;
en réponse à la détermination que le score de confiance de mot d'activation satisfait une valeur seuil, la détermination pour savoir si le score de confiance de mot d'activation indique une faible probabilité qu'au moins la partie des données audio comprenne le mot d'activation ; et
en réponse à la détermination que le score de confiance de mot d'activation indique la faible probabilité qu'au moins la partie des données audio comprenne le mot d'activation, la détermination de transmettre la demande de première représentation textuelle candidate supplémentaire de l'énoncé parlé au premier dispositif client supplémentaire.

12. Système, comprenant :
un ou plusieurs processeurs (914) ; et
une mémoire (925) configurée pour stocker des instructions qui, lorsqu'elles sont exécutées par un ou plusieurs processeurs, amènent le ou les processeurs à réaliser des opérations qui comprennent :
la détection, au niveau d'un dispositif client (202), de données audio qui capturent un énoncé parlé d'un utilisateur, ledit dispositif client (202) étant dans un environnement avec un ou plusieurs dispositifs clients supplémentaires (204, 206) et étant en communication locale avec le ou les dispositifs clients supplémentaires (204, 206) par l'intermédiaire d'un réseau local, le ou les dispositifs clients supplémentaires comprenant au moins un premier dispositif client supplémentaire (204) ;
le traitement, au niveau du dispositif client, des données audio à l'aide d'un modèle (312) de reconnaissance automatique de la parole, ASR, stocké localement au niveau du dispositif client pour générer (220) une représentation textuelle candidate de l'énoncé parlé ;
en réponse à la détermination de transmettre une demande de première représentation textuelle candidate supplémentaire de l'énoncé parlé au premier dispositif client supplémentaire (204), la transmission de la demande de première représentation textuelle candidate supplémentaire de l'énoncé parlé au premier dispositif client supplémentaire ;
après la transmission de la demande, la réception, au niveau du dispositif client (202), en provenance du premier dispositif client supplémentaire et par l'intermédiaire du réseau local, de la première représentation textuelle candidate supplémentaire de l'énoncé parlé, la première représentation textuelle candidate supplémentaire de l'énoncé parlé générée (222) localement au niveau du premier dispositif client supplémentaire est basée sur (a) les données audio et/ou (b) les données audio détectées localement capturant l'énoncé parlé détecté au niveau du premier dispositif client supplémentaire, ladite première représentation textuelle candidate supplémentaire de l'énoncé parlé étant générée en traitant les données audio et/ou les données audio générées localement à l'aide d'un premier modèle ASR supplémentaire (322) stocké localement au niveau du premier dispositif client supplémentaire ; et
la détermination, au niveau du dispositif client (202), d'une représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire.

13. Système de la revendication 12,
ledit ou lesdits dispositifs clients supplémentaires comprenant au moins le premier dispositif client supplémentaire et un second dispositif client supplémentaire ;
ladite réception, au niveau du dispositif client, en provenance du premier dispositif client supplémentaire et par l'intermédiaire du réseau local, de la première représentation textuelle candidate supplémentaire comprenant en outre :
la réception, au niveau du dispositif client, en provenance du second dispositif client supplémentaire et par l'intermédiaire du réseau local, d'une seconde représentation textuelle candidate supplémentaire de l'énoncé parlé générée localement au niveau du second dispositif client supplémentaire qui est basée sur (a) les données audio et/ou (b) les données audio détectées localement supplémentaires capturant l'énoncé parlé détecté au niveau du second dispositif client supplémentaire, ladite seconde représentation textuelle candidate supplémentaire de l'énoncé parlé étant générée en traitant les données audio et/ou les données audio générées localement supplémentaires à l'aide d'un second modèle ASR supplémentaire stocké localement au niveau du second dispositif client supplémentaire ; et
ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant en outre :
la détermination de la représentation textuelle de l'énoncé parlé sur la base de la représentation textuelle candidate de l'énoncé parlé, de la première représentation textuelle candidate supplémentaire de l'énoncé parlé générée par le premier dispositif client supplémentaire, et de la seconde représentation textuelle candidate supplémentaire de l'énoncé parlé générée par le second dispositif client supplémentaire.

14. Système de la revendication 12 ou de la revendication 13, ladite première représentation textuelle candidate supplémentaire de l'énoncé parlé comprenant une pluralité d'hypothèses, et ladite détermination de la représentation textuelle de l'énoncé parlé sur la base de la représentation textuelle candidate de l'énoncé parlé et de la première représentation textuelle candidate supplémentaire de l'énoncé parlé générée par le premier dispositif client supplémentaire comprenant :
le reclassement de la pluralité d'hypothèses à l'aide du dispositif client ; et
la détermination de la représentation textuelle de l'énoncé parlé sur la base de la représentation textuelle candidate de l'énoncé parlé et de la pluralité d'hypothèses reclassées.

15. Programme informatique comprenant des instructions qui, lorsqu'elles sont exécutées par un ou plusieurs processeurs (914), amènent le ou les processeurs à effectuer le procédé de l'une quelconque des revendications 1 à 11.
